# EUROPEAN PATENT SPECIFICATION

(11) **EP 1 539 642 B1**
(45) Date of publication and mention of the grant of the patent: **06.04.2011**
(21) Application number: 03766852.2
(22) Date of filing: 08.07.2003
(51) Int. Cl.: C01B 21/20, C01B 39/48, C10G 11/05

(54) **MOLECULAR SIEVE SSZ-64**
MOLSIEB SSZ-64
TAMIS MOLECULAIRE SSZ-64

(30) Priority: 01.08.2002 US 211890; 01.08.2002 US 211888; 01.08.2002 US 211889
(43) Date of publication of application: 15.06.2005
(73) Proprietor: Chevron U.S.A. Inc., San Ramon, CA 94583 (US)
(72) Inventor: ELOMARI, Saleh, Fairfield, CA 94534 (US)
(74) Representative: Nash, David Allan
(86) International application number: PCT/US2003/021607
(87) International publication number: WO 2004/013042

(56) References cited:
- EP-A1- 1 148 027
- WO-A-01/92155
- WO-A-98/29336
- US-A- 4 544 538
- US-A- 4 698 217
- US-A- 4 975 258
- US-A- 5 187 132
- US-A1- 2002 182 145
- US-B1- 6 461 580
- US-B1- 6 464 956

## Description

The present invention relates to new crystalline molecular sieve SSZ-64 and a method for preparing SSZ-64 using a N-cyclobutylmethyl-N-ethylhexamethyleneiminium cation or N-cyclobutylmethyl-N-ethylheptamethyleneiminium cation structure directing agent.

### State of the Art

Because of their unique sieving characteristics, as well as their catalytic properties, crystalline molecular sieves and zeolites are especially useful in applications such as hydrocarbon conversion, gas drying and separation. Although many different crystalline molecular sieves have been disclosed, there is a continuing need for new zeolites with desirable properties for gas separation and drying, hydrocarbon and chemical conversions, and other applications. New zeolites may contain novel internal pore architectures, providing enhanced selectivities in these processes.

Crystalline aluminosilicates are usually prepared from aqueous reaction mixtures containing alkali or alkaline earth metal oxides, silica, and alumina. Crystalline borosilicates are usually prepared under similar reaction conditions except that boron is used in place of aluminum. By varying the synthesis conditions and the composition of the reaction mixture, different zeolites can often be formed.

### SUMMARY OF THE INVENTION

The present invention is directed to a family of crystalline molecular sieves with unique properties, referred to herein as "molecular sieve SSZ-64" or simply "SSZ-64". Preferably, SSZ-64 is obtained in its silicate, aluminosilicate, titanosilicate, vanadosilicate or borosilicate form. The term "silicate" refers to a molecular sieve having a high mole ratio of silicon oxide relative to aluminum oxide, preferably a mole ratio greater than 100, including molecular sieves comprised entirely of silicon oxide. As used herein, the term "aluminosilicate" refers to a molecular sieve containing both alumina and silica and the term "borosilicate" refers to a molecular sieve containing oxides of both boron and silicon.

In accordance with this invention, there is provided a molecular sieve having a mole ratio greater than about 15 of an oxide of a first tetravalent element to an oxide of a second tetravalent element different from said first tetravalent element, trivalent element, pentavalent element or mixture thereof and having, after calcination, the X-ray diffraction lines of Table II. It should be noted that that the phrase "mole ratio greater than 15" refers to SSZ-64 containing both the first and second oxides, as well as to SSZ-64 containing only the first oxide, i.e., the mole ratio of the first oxide to the "second" oxide is infinity. To produce SSZ-64 containing only the first oxide, it may be necessary to prepare a version of SSZ-64 containing both the first and second oxides, and then remove the metal atoms of the second oxide.

Further, in accordance with this invention, there is provided a molecular sieve having a mole ratio greater than about 15 of an oxide selected from silicon oxide, germanium oxide and mixtures thereof to an oxide selected from aluminum oxide, gallium oxide, iron oxide, boron oxide, titanium oxide, indium oxide, vanadium oxide and mixtures thereof and having, after calcination, the X-ray diffraction lines of Table II below.

The present invention further provides such a molecular sieve having a composition, as synthesized and in the anhydrous state, in terms of mole ratios as follows:

| | |
|---|---|
| YO₂/W_{c}O_{d} | 15 - 180 |
| M_{2/n}/YO₂ | 0.01 - 0.03 |
| Q/YO₂ | 0.02 - 0.05 |

wherein Y is silicon, germanium or a mixture thereof; W is aluminum, gallium, iron, boron, titanium, indium, vanadium or mixtures thereof; c is 1 or 2; d is 2 when c is 1 (i.e., W is tetravalent) or d is 3 or 5 when c is 2 (i.e., d is 3 when W is trivalent or 5 when W is pentavalent); M is an alkali metal cation, alkaline earth metal cation or mixtures thereof; n is the valence of M (i.e., 1 or 2); and Q is a N-cyclobutylmethyl-N-ethylhexamethyleneiminium cation or N-cyclobutylmethyl-N-ethylheptamethyleneiminium cation.

In accordance with this invention, there is also provided a molecular sieve prepared by thermally treating a zeolite having a mole ratio of an oxide selected from silicon oxide, germanium oxide and mixtures thereof to an oxide selected from aluminum oxide, gallium oxide, iron oxide, boron oxide, titanium oxide, indium oxide, vanadium oxide and mixtures thereof greater than about 15 at a temperature of from about 200°C to about 800°C, the thus-prepared zeolite having the X-ray diffraction lines of Table II. The present invention also includes this thus-prepared molecular sieve which is predominantly in the hydrogen form, which hydrogen form is prepared by ion exchanging with an acid or with a solution of an ammonium salt followed by a second calcination.

Also provided in accordance with the present invention is a method of preparing a crystalline material comprising an oxide of a first tetravalent element and an oxide of a second tetravalent element which is different from said first tetravalent element, trivalent element, pentavalent element or mixture thereof, said method comprising contacting under crystallization conditions sources of said oxides and a structure directing agent comprising a N-cyclobutylmethyl-N-ethylhexamethyleneiminium cation or N-cyclobutylmethyl-N-ethylheptamethyleneiminium cation.

In accordance with the present invention there is also provided a process for converting hydrocarbons comprising contacting a hydrocarbonaceous feed at hydrocarbon converting conditions with a catalyst comprising the zeolite of this invention. The zeolite may be predominantly in the hydrogen form. It may also be substantially free of acidity.

Further provided by the present invention is a hydrocracking process comprising contacting a hydrocarbon feedstock under hydrocracking conditions with a catalyst comprising the zeolite of this invention, preferably predominantly in the hydrogen form.

This invention also includes a dewaxing process comprising contacting a hydrocarbon feedstock under dewaxing conditions with a catalyst comprising the zeolite of this invention, preferably predominantly in the hydrogen form.

The present invention also includes a process for improving the viscosity index of a dewaxed product of waxy hydrocarbon feeds comprising contacting the waxy hydrocarbon feed under isomerization dewaxing conditions with a catalyst comprising the zeolite of this invention, preferably predominantly in the hydrogen form.

The present invention further includes a process for producing a C₂₀₊ lube oil from a C₂₀₊ olefin feed comprising isomerizing said olefin feed under isomerization conditions over a catalyst comprising the zeolite of this invention. The zeolite may be predominantly in the hydrogen form. The catalyst may contain at least one Group VIII metal.

In accordance with this invention, there is also provided a process for catalytically dewaxing a hydrocarbon oil feedstock boiling above about 350°F and containing straight chain and slightly branched chain hydrocarbons comprising contacting said hydrocarbon oil feedstock in the presence of added hydrogen gas at a hydrogen pressure of about 15-3000 psi with a catalyst comprising the zeolite of this invention, preferably predominantly in the hydrogen form. The catalyst may contain at least one Group VIII metal. The catalyst may be a layered catalyst comprising a first layer comprising at least one Group VIII metal and the zeolite of this invention, and a second layer comprising an aluminosilicate zeolite which is more shape selective than the zeolite of said first layer. The first layer may contain at least one Group VIII metal.

Also included in the present invention is a process for preparing a lubricating oil which comprises hydrocracking in a hydrocracking zone a hydrocarbonaceous feedstock to obtain an effluent comprising a hydrocracked oil, and catalytically dewaxing said effluent comprising hydrocracked oil at a temperature of at least about 400°F and at a pressure of from about 15 psig to about 3000 psig in the presence of added hydrogen gas with a catalyst comprising the zeolite of this invention. The zeolite may be predominantly in the hydrogen form. The catalyst may contain at least one Group VIII metal.

Further included in this invention is a process for isomerization dewaxing a raffinate comprising contacting said raffinate in the presence of added hydrogen with a catalyst comprising the zeolite of this invention. The raffinate may be bright stock, and the zeolite may be predominantly in the hydrogen form. The catalyst may contain at least one Group VIII metal.

Also included in this invention is a process for increasing the octane of a hydrocarbon feedstock to produce a product having an increased aromatics content comprising contacting a hydrocarbonaceous feedstock which comprises normal and slightly branched hydrocarbons having a boiling range above about 40°C and less than about 200°C, under aromatic conversion conditions with a catalyst comprising the zeolite of this invention made substantially free of acidity by neutralizing said zeolite with a basic metal. Also provided in this invention is such a process wherein the zeolite contains a Group VIII metal component.

Also provided by the present invention is a catalytic cracking process comprising contacting a hydrocarbon feedstock in a reaction zone under catalytic cracking conditions in the absence of added hydrogen with a catalyst comprising the zeolite of this invention, preferably predominantly in the hydrogen form. Also included in this invention is such a catalytic cracking process wherein the catalyst additionally comprises a large pore crystalline cracking component.

This invention further provides an isomerization process for isomerizing C₄ to C₇ hydrocarbons, comprising contacting a feed having normal and slightly branched C₄ to C₇ hydrocarbons under isomerizing conditions with a catalyst comprising the zeolite of this invention, preferably predominantly in the hydrogen form. The zeolite may be impregnated with at least one Group VIII metal, preferably platinum. The catalyst may be calcined in a steam/air mixture at an elevated temperature after impregnation of the Group VIII metal.

Also provided by the present invention is a process for alkylating an aromatic hydrocarbon which comprises contacting under alkylation conditions at least a molar excess of an aromatic hydrocarbon with a C₂ to C₂₀ olefin under at least partial liquid phase conditions and in the presence of a catalyst comprising the zeolite of this invention, preferably predominantly in the hydrogen form. The olefin may be a C₂ to C₄ olefin, and the aromatic hydrocarbon and olefin may be present in a molar ratio of about 4:1 to about 20:1, respectively. The aromatic hydrocarbon may be selected from the group consisting of benzene, toluene, ethylbenzene, xylene, naphthalene, naphthalene derivatives, dimethylnaphthalene or mixtures thereof.

Further provided in accordance with this invention is a process for transalkylating an aromatic hydrocarbon which comprises contacting under transalkylating conditions an aromatic hydrocarbon with a polyalkyl aromatic hydrocarbon under at least partial liquid phase conditions and in the presence of a catalyst comprising the zeolite of this invention, preferably predominantly in the hydrogen form. The aromatic hydrocarbon and the polyalkyl aromatic hydrocarbon may be present in a molar ratio of from about 1:1 to about 25:1, respectively.

The aromatic hydrocarbon may be selected from the group consisting of benzene, toluene, ethylbenzene, xylene, or mixtures thereof, and the polyalkyl aromatic hydrocarbon may be a dialkylbenzene.

Further provided by this invention is a process to convert paraffins to aromatics which comprises contacting paraffins under conditions which cause paraffins to convert to aromatics with a catalyst comprising the zeolite of this invention, said catalyst comprising gallium, zinc, or a compound of gallium or zinc.

In accordance with this invention there is also provided a process for isomerizing olefins comprising contacting said olefin under conditions which cause isomerization of the olefin with a catalyst comprising the zeolite of this invention.

Further provided in accordance with this invention is a process for isomerizing an isomerization feed comprising an aromatic C₈ stream of xylene isomers or mixtures of xylene isomers and ethylbenzene, wherein a more nearly equilibrium ratio of ortho-, meta- and para-xylenes is obtained, said process comprising contacting said feed under isomerization conditions with a catalyst comprising the zeolite of this invention.

The present invention further provides a process for oligomerizing olefins comprising contacting an olefin feed under oligomerization conditions with a catalyst comprising the zeolite of this invention.

This invention also provides a process for converting lower alcohols and other oxygenated hydrocarbons comprising contacting said lower alcohol or other oxygenated hydrocarbon with a catalyst comprising the zeolite of this invention under conditions to produce liquid products.

Further provided in accordance with the present invention is a process for the production of higher molecular weight hydrocarbons from lower molecular weight hydrocarbons comprising the steps of:
(a) introducing into a reaction zone a lower molecular weight hydrocarbon-containing gas and contacting said gas in said zone under C₂₊ hydrocarbon synthesis conditions with the catalyst and a metal or metal compound capable of converting the lower molecular weight hydrocarbon to a higher molecular weight hydrocarbon; and
(b) withdrawing from said reaction zone a higher molecular weight hydrocarbon-containing stream.

In accordance with this invention, there is further provided an improved process for the reduction of oxides of nitrogen contained in a gas stream in the presence of oxygen wherein said process comprises contacting the gas stream with a zeolite, the improvement comprising using as the zeolite a zeolite having a mole ratio greater than about 15 of an oxide of a first tetravalent element to an oxide of a second tetravalent element different from said first tetravalent element, trivalent element, pentavalent element or mixture thereof and having, after calcination, the X-ray diffraction lines of Table II. The zeolite may contain a metal or metal ions (such as cobalt, copper or mixtures thereof) capable of catalyzing the reduction of the oxides of nitrogen, and may be conducted in the presence of a stoichiometric excess of oxygen. In a preferred embodiment, the gas stream is the exhaust stream of an internal combustion engine.

### DETAILED DESCRIPTION OF THE INVENTION

The present invention comprises a family of crystalline, large pore molecular sieves designated herein "molecular sieve SSZ-64" or simply "SSZ-64". As used herein, the term "large pore" means having an average pore size diameter greater than about 6.0 Angstroms, preferably from about 6.5 Angstroms to about 7.5 Angstroms.

In preparing SSZ-64, a N-cyclobutylmethyl-N-ethylhexamethyleneiminium cation or N-cyclobutylmethyl-N-ethylheptamethyleneiminium cation is used as a structure directing agent ("SDA"), also known as a crystallization template. In general, SSZ-64 is prepared by contacting an active source of one or more oxides selected from the group consisting of monovalent element oxides, divalent element oxides, trivalent element oxides, and tetravalent element oxides with the N-cyclobutylmethyl-N-ethylhexamethyleneiminium cation or N-cyclobutylmethyl-N-ethylheptamethyleneiminium cation SDA.

SSZ-64 is prepared from a reaction mixture having the composition shown in Table A below.

**TABLE A**

| | Reaction Mixture | |
|---|---|---|
| | Typical | Preferred |
| YO₂/WₐO_{b} | >15 | 30 - 70 |
| OH-/YO₂ | 0.10 - 0.50 | 0.20 - 0.30 |
| Q/YO₂ | 0.05 - 0.50 | 0.10 - 0.20 |
| M_{2/n}/YO₂ | 0.02 - 0.40 | 0.10 - 0.25 |
| H₂O/YO₂ | 30 - 80 | 35 - 45 |

where Y, W, Q, M and n are as defined above, and a is 1 or 2, and b is 2 when a is 1 (i.e., W is tetravalent) and b is 3 when a is 2 (i.e., W is trivalent).

In practice, SSZ-64 is prepared by a process comprising:
(a) preparing an aqueous solution containing sources of at least one oxide capable of forming a crystalline molecular sieve and a N-cyclobutylmethyl-N-ethylhexamethyleneiminium cation or N-cyclobutylmethyl-N-ethylheptamethyleneiminium cation having an anionic counterion which is not detrimental to the formation of SSZ-64;
(b) maintaining the aqueous solution under conditions sufficient to form crystals of SSZ-64; and
(c) recovering the crystals of SSZ-64.

Accordingly, SSZ-64 may comprise the crystalline material and the SDA in combination with metallic and non-metallic oxides bonded in tetrahedral coordination through shared oxygen atoms to form a cross-linked three dimensional crystal structure. The metallic and non-metallic oxides comprise one or a combination of oxides of a first tetravalent element(s), and one or a combination of a second tetravalent element(s) different from the first tetravalent element(s), trivalent element(s), pentavalent element(s) or mixture thereof. The first tetravalent element(s) is preferably selected from the group consisting of silicon, germanium and combinations thereof. More preferably, the first tetravalent element is silicon. The second tetravalent element (which is different from the first tetravalent element), trivalent element and pentavalent element is preferably selected from the group consisting of aluminum, gallium, iron, boron, titanium, indium, vanadium and combinations thereof. More preferably, the second trivalent or tetravalent element is aluminum or boron.

Typical sources of aluminum oxide for the reaction mixture include aluminates, alumina, aluminum colloids, aluminum oxide coated on silica sol, hydrated alumina gels such as Al(OH)₃ and aluminum compounds such as AlCl₃ and Al₂(SO₄)₃. Typical sources of silicon oxide include silicates, silica hydrogel, silicic acid, fumed silica, colloidal silica, tetra-alkyl orthosilicates, and silica hydroxides. Boron, as well as gallium, germanium, titanium, indium, vanadium and iron, can be added in forms corresponding to their aluminum and silicon counterparts.

A source zeolite reagent may provide a source of aluminum or boron. In most cases, the source zeolite also provides a source of silica. The source zeolite in its dealuminated or deboronated form may also be used as a source of silica, with additional silicon added using, for example, the conventional sources listed above. Use of a source zeolite reagent as a source of alumina for the present process is more completely described in U.S. Patent No. 5,225,179, issued July 6, 1993 to Nakagawa entitled "Method of Making Molecular Sieves".

Typically, an alkali metal hydroxide and/or an alkaline earth metal hydroxide, such as the hydroxide of sodium, potassium, lithium, cesium, rubidium, calcium, and magnesium, is used in the reaction mixture; however, this component can be omitted so long as the equivalent basicity is maintained. The SDA may be used to provide hydroxide ion. Thus, it may be beneficial to ion exchange, for example, the halide for hydroxide ion, thereby reducing or eliminating the alkali metal hydroxide quantity required. The alkali metal cation or alkaline earth cation may be part of the as-synthesized crystalline oxide material, in order to balance valence electron charges therein.

The reaction mixture is maintained at an elevated temperature until the crystals of the SSZ-64 are formed. The hydrothermal crystallization is usually conducted under autogenous pressure, at a temperature between 100°C and 200°C, preferably between 135°C and 160°C. The crystallization period is typically greater than 1 day and preferably from about 3 days to about 20 days.

Preferably, the molecular sieve is prepared using mild stirring or agitation.

During the hydrothermal crystallization step, the SSZ-64 crystals can be allowed to nucleate spontaneously from the reaction mixture. The use of SSZ-64 crystals as seed material can be advantageous in decreasing the time necessary for complete crystallization to occur. In addition, seeding can lead to an increased purity of the product obtained by promoting the nucleation and/or formation of SSZ-64 over any undesired phases. When used as seeds, SSZ-64 crystals are added in an amount between 0.1 and 10% of the weight of silica used in the reaction mixture.

Once the molecular sieve crystals have formed, the solid product is separated from the reaction mixture by standard mechanical separation techniques such as filtration. The crystals are water-washed and then dried, e.g., at 90°C to 150°C for from 8 to 24 hours, to obtain the as-synthesized SSZ-64 crystals. The drying step can be performed at atmospheric pressure or under vacuum.

SSZ-64 as prepared has a mole ratio of an oxide selected from silicon oxide, germanium oxide and mixtures thereof to an oxide selected from aluminum oxide, gallium oxide, iron oxide, boron oxide, titanium oxide, indium oxide, vanadium oxide and mixtures thereof greater than about 15; and has, after calcination, the X-ray diffraction lines of Table II below. SSZ-64 further has a composition, as synthesized (i.e., prior to removal of the SDA from the-64) and in the anhydrous state, in terms of mole ratios, shown in Table B below.

**TABLE B**

| As-Synthesized SSZ-64 | |
|---|---|
| YO₂/W_{c}O_{d} | 15-180 |
| M_{2/n}/YO₂ | 0.01-0.03 |
| Q/YO₂ | 0.02 - 0.05 |

where Y, W, c, d, M and Q are as defined above.

SSZ-64 can be made essentially aluminum free, i.e., having a silica to alumina mole ratio of ∞. A method of increasing the mole ratio of silica to alumina is by using standard acid leaching or chelating treatments. However, essentially aluminum-free SSZ-64 can be synthesized directly using essentially aluminum-free silicon sources as the main tetrahedral metal oxide component, if boron is also present. The boron can then be removed, if desired, by treating the borosilicate SSZ-64 with acetic acid at elevated temperature (as described in Jones et al., Chem. Mater., 2001, 13, 1041-1050) to produce an all-silica version of SSZ-64. SSZ-64 can also be prepared directly as a borosilicate. If desired, the boron can be removed as described above and replaced with metal atoms by techniques known in the art to make, e.g." an aluminosilicate version of SSZ-64.

Lower silica to alumina ratios may also be obtained by using methods which insert aluminum into the crystalline framework. For example, aluminum insertion may occur by thermal treatment of the zeolite in combination with an alumina binder or dissolved source of alumina. Such procedures are described in U.S. Patent No. 4,559,315, issued on December 17,1985 to Chang et al.

It is believed that SSZ-64 is comprised of a new framework structure or topology which is characterized by its X-ray diffraction pattern. SSZ-64, as-synthesized, has a crystalline structure whose X-ray powder diffraction pattern exhibit the characteristic lines shown in Table I and is thereby distinguished from other molecular sieves.

**TABLE I**

| As-Synthesized SSZ-64 | | |
|---|---|---|
| 2 Theta^{(a)} | d-spacing (Ǻ) | Relative Intensity (%) |
| 6.64 | 13.30 | M |
| 7.44 | 11.87 | M |
| 8.40 | 10.52 | W |
| 18.12 | 4.89 | W |
| 21.32 | 4.16 | W |
| 21.50 | 4.13 | W |
| 22.56 | 3.94 | VS |
| 25.44 | 3.50 | M |
| 26.82 | 3.32 | W |
| 43.94 | 2.06 | W |

| | | |
|---|---|---|
| ^{(a)} ± 0.2 ^{(b)} The X-ray patterns provided are based on a relative intensity scale in which the strongest line in the X-ray pattern is assigned a value of 100: W(weak) is less than 20; M(medium) is between 20 and 40; S(strong) is between 40 and 60; VS(very strong) is greater than 60. | | |

Table IA below shows the X-ray powder diffraction lines for as-synthesized SSZ-64 including actual relative intensities.

**TABLE IA**

| 2 Theta^{(a)} | d-spacing (Ǻ) | Relative Intensity (%) |
|---|---|---|
| 6.64 | 13.30 | 23.7 |
| 7.44 | 11.87 | 30.2 |
| 8.40 | 10.52 | 17.7 |
| 13.40 | 6.60 | 3.8 |
| 14.48 | 6.11 | 1.5 |
| 14.94 | 5.92 | 1.5 |
| 16.94 | 5.23 | 3.5 |
| 17.12 | 5.17 | 4.8 |
| 18.12 | 4.89 | 11.5 |
| 19.20 | 4.62 | 1.4 |
| 19.38 | 4.58 | 1.5 |
| 20.38 | 4.35 | 2.0 |
| 21.32 | 4.16 | 12.8 |
| 21.50 | 4.13 | 7.5 |
| 22.56 | 3.94 | 100.0 |
| 23.16 | 3.84 | 4.3 |
| 24.42 | 3.64 | 3.4 |
| 25.44 | 3.50 | 25.6 |
| 26.82 | 3.32 | 5.8 |
| 26.96 | 3.31 | 5.8 |
| 27.52 | 3.24 | 4.8 |
| 28.32 | 3.15 | 4.5 |
| 28.62 | 3.12 | 5.2 |
| 28.96 | 3.08 | 5.0 |
| 29.74 | 3.00 | 2.5 |
| 30.46 | 2.93 | 0.7 |
| 31.72 | 2.82 | 2.2 |
| 32.85 | 2.72 | 1.1 |
| 33.72 | 2.66 | 1.1 |
| 34.75 | 2.58 | 1.3 |
| 36.42 | 2.47 | 2.3 |
| 37.00 | 2.43 | 1.7 |
| 37.47 | 2.40 | 1.1 |
| 38.18 | 2.36 | 0.7 |
| 39.58 | 2.28 | 1.1 |

| | | |
|---|---|---|
| ^{(a)} ± 0.2 | | |

After calcination, the SSZ-64 molecular sieves have a crystalline structure whose X-ray powder diffraction pattern include the characteristic lines shown in Table II:

**TABLE II**

| Calcined SSZ-64 | | |
|---|---|---|
| 2 Theta^{(a)} | d-spacing (Ǻ) | Relative Intensity (%) |
| 6.62 | 13.34 | VS |
| 7.44 | 11.87 | S |
| 8.42 | 10.49 | M |
| 14.54 | 6.09 | W |
| 14.98 | 5.91 | W |
| 21.28 | 4.17 | W |
| 22.58 | 3.93 | VS |
| 25.48 | 3.49 | M-S |
| 26.58 | 3.35 | W |
| 28.34 | 3.15 | W |

| | | |
|---|---|---|
| ^{(a)} ± 0.2 | | |

Table IIA below shows the X-ray powder diffraction lines for calcined SSZ-64 including actual relative intensities.

**TABLE IIA**

| 2 Theta^{(a)} | d-spacing (Ǻ) | Relative Intensity (%) |
|---|---|---|
| 6.62 | 13.34 | 100.0 |
| 7.44 | 11.87 | 43.2 |
| 8.42 | 10.49 | 33.8 |
| 10.14 | 8.72 | 4.3 |
| 11.00 | 8.04 | 2.3 |
| 11.46 | 7.72 | 3.2 |
| 12.10 | 7.31 | 3.3 |
| 13.42 | 6.59 | 6.6 |
| 14.54 | 6.09 | 13.3 |
| 14.98 | 5.91 | 15.6 |
| 16.16 | 5.48 | 2.9 |
| 17.28 | 5.13 | 6.3 |
| 18.08 | 4.90 | 6.8 |
| 20.39 | 4.35 | 4.1 |
| 21.28 | 4.17 | 14.1 |
| 22.58 | 3.93 | 89.3 |
| 24.48 | 3.63 | 3.8 |
| 25.48 | 3.49 | 39.5 |
| 26.58 | 3.35 | 11.4 |
| 27.60 | 3.23 | 3.7 |
| 28.34 | 3.15 | 8.8 |
| 28.98 | 3.08 | 6.1 |
| 29.64 | 3.01 | 3.9 |
| 30.52 | 2.93 | 3.2 |
| 33.60 | 2.66 | 2.4 |
| 36.38 | 2.47 | 3.0 |

| | | |
|---|---|---|
| ^{(a)} ± 0.2 | | |

The X-ray powder diffraction patterns were determined by standard techniques. The radiation was the K-alpha/doublet of copper. The peak heights and the positions, as a function of 2θ where θ is the Bragg angle, were read from the relative intensities of the peaks, and d, the interplanar spacing in Angstroms corresponding to the recorded lines, can be calculated.

The variation in the scattering angle (two theta) measurements, due to instrument error and to differences between individual samples, is estimated at ± 0.20 degrees.

The X-ray diffraction pattern of Table I is representative of "as-synthesized" or "as-made" SSZ-64 molecular sieves. Minor variations in the diffraction pattern can result from variations in the silica-to-alumina or silica-to-boron mole ratio of the particular sample due to changes in lattice constants. In addition, sufficiently small crystals will affect the shape and intensity of peaks, leading to significant peak broadening.

Representative peaks from the X-ray diffraction pattern of calcined SSZ-64 are shown in Table II. Calcination an also result in changes in the intensities of the peaks as compared to patterns of the "as-made" material, as well as minor shifts in the diffraction pattern. The molecular sieve produced by exchanging the metal or other cations present in the molecular sieve with various other cations (such as H⁺ or NH₄⁺) yields essentially the same diffraction pattern, although again, there may be minor shifts in the interplanar spacing and variations in the relative intensities of the peaks. Notwithstanding these minor perturbations, the basic crystal lattice remains unchanged by these treatments.

Crystalline SSZ-64 can be used as-synthesized, but preferably will be thermally treated (calcined). Usually, it is desirable to remove the alkali metal cation by ion exchange and replace it with hydrogen, ammonium, or any desired metal ion. The molecular sieve can be leached with chelating agents, e.g., EDTA or dilute acid solutions, to increase the silica to alumina mole ratio. The molecular sieve can also be steamed; steaming helps stabilize the crystalline lattice to attack from acids.

The molecular sieve can be used in intimate combination with hydrogenating components, such as tungsten, vanadium, molybdenum, rhenium, nickel, cobalt, chromium, manganese, or a noble metal, such as palladium or platinum, for those applications in which a hydrogenation-dehydrogenation function is desired.

Metals may also be introduced into the molecular sieve by replacing some of the cations in the molecular sieve with metal cations via standard ion exchange techniques (see, for example, U.S. Patent Nos. 3,140,249 issued July 7, 1964 to Plank et al.; 3,140,251 issued July 7, 1964 to Plank et al.; and 3,140,253 issued July 7, 1964 to Plank et al.). Typical replacing cations can include metal cations, e.g., rare earth, Group IA, Group IIA and Group VIII metals, as well as their mixtures. Of the replacing metallic cations, cations of metals such as rare earth, Mn, Ca, Mg, Zn, Cd, Pt, Pd, Ni, Co, Ti, Al, Sn, and Fe are particularly preferred.

The hydrogen, ammonium, and metal components can be ion-exchanged into the SSZ-64. The SSZ-64 can also be impregnated with the metals, or, the metals can be physically and intimately admixed with the SSZ-64 using standard methods known to the art.

Typical ion-exchange techniques involve contacting the synthetic molecular sieve with a solution containing a salt of the desired replacing cation or cations. Although a wide variety of salts can be employed, chlorides and other halides, acetates, nitrates, and sulfates are particularly preferred. The molecular sieve is usually calcined prior to the ion-exchange procedure to remove the organic matter present in the channels and on the surface, since this results in a more effective ion exchange. Representative ion exchange techniques are disclosed in a wide variety of patents including U.S. Patent Nos. 3,140,249 issued on July 7, 1964 to Plank et al.; 3,140,251 issued on July 7, 1964 to Plank et al.; and 3,140,253 issued on July 7, 1964 to Plank et al.

Following contact with the salt solution of the desired replacing cation, the molecular sieve is typically washed with water and dried at temperatures ranging from 65°C to about 200°C. After washing, the molecular sieve can be calcined in air or inert gas at temperatures ranging from about 200°C to about 800°C for periods of time ranging from 1 to 48 hours, or more, to produce a catalytically active product especially useful in hydrocarbon conversion processes.

Regardless of the cations present in the synthesized form of SSZ-64, the spatial arrangement of the atoms which form the basic crystal lattice of the molecular sieve remains essentially unchanged.

SSZ-64 can be formed into a wide variety of physical shapes. Generally speaking, the molecular sieve can be in the form of a powder, a granule, or a molded product, such as extrudate having a particle size sufficient to pass through a 2-mesh (Tyler) screen and be retained on a 400-mesh (Tyler) screen. In cases where the catalyst is molded, such as by extrusion with an organic binder, the SSZ-64 can be extruded before drying, or, dried or partially dried and then extruded.

SSZ-64 can be composited with other materials resistant to the temperatures and other conditions employed in organic conversion processes. Such matrix materials include active and inactive materials and synthetic or naturally occurring zeolites as well as inorganic materials such as clays, silica and metal oxides. Examples of such materials and the manner in which they can be used are disclosed in U.S. Patent No. 4,910,006, issued May 20, 1990 to Zones et al., and U.S. Patent No. 5,316,753, issued May 31, 1994 to Nakagawa,

### Hydrocarbon Conversion Processes

SSZ-64 zeolites are useful in hydrocarbon conversion reactions. Hydrocarbon conversion reactions are chemical and catalytic processes in which carbon containing compounds are changed to different carbon containing compounds. Examples of hydrocarbon conversion reactions in which SSZ-64 are expected to be useful include hydrocracking, dewaxing, catalytic cracking and olefin and aromatics formation reactions. The catalysts are also expected to be useful in other petroleum refining and hydrocarbon conversion reactions such as isomerizing n-paraffins and naphthenes, polymerizing and oligomerizing olefinic or acetylenic compounds such as isobutylene and butene-1, reforming, isomerizing polyalkyl substituted aromatics (e.g., m-xylene), and disproportionating aromatics (e.g., toluene) to provide mixtures of benzene, xylenes and higher methylbenzenes and oxidation reactions. Also included are rearrangement reactions to make various naphthalene derivatives, and forming higher molecular weight hydrocarbons from lower molecular weight hydrocarbons (e.g., methane upgrading).
The SSZ-64 catalysts may have high selectivity, and under hydrocarbon conversion conditions can provide a high percentage of desired products relative to total products.

SSZ-64 zeolites can be used in processing hydrocarbonaceous feedstocks. Hydrocarbonaceous feedstocks contain carbon compounds and can be from many different sources, such as virgin petroleum fractions, recycle petroleum fractions, shale oil, liquefied coal, tar sand oil, synthetic paraffins from NAO, recycled plastic feedstocks and, in general, can be any carbon containing feedstock susceptible to zeolitic catalytic reactions. Depending on the type of processing the hydrocarbonaceous feed is to undergo, the feed can contain metal or be free of metals, it can also have high or low nitrogen or sulfur impurities. It can be appreciated, however, that in general processing will be more efficient (and the catalyst more active) the lower the metal, nitrogen, and sulfur content of the feedstock.

The conversion of hydrocarbonaceous feeds can take place in any convenient mode, for example, in fluidized bed, moving bed, or fixed bed reactors depending on the types of process desired. The formulation of the catalyst particles will vary depending on the conversion process and method of operation.

Other reactions which can be performed using the catalyst of this invention containing a metal, e.g., a Group VIII metal such platinum, include hydrogenation-dehydrogenation reactions, denitrogenation and desulfurization reactions.

The following table indicates typical reaction conditions which may be employed when using catalysts comprising SSZ-64 in the hydrocarbon conversion reactions of this invention. Preferred conditions are indicated in parentheses.

| Process | Temp.,°C | Pressure | LHSV |
|---|---|---|---|
| Hydrocracking | 175-485 | 0.5-350 bar | 0.1-30 |
| Dewaxing | 200-475 | 15-3000 psig | 0.1-20 |
| | (250-450) | (200-3000) | (0.2-10) |
| Aromatics | 400-600 | atm.-10 bar | 0.1-15 |
| formation | (480-550) | | |
| Cat. cracking | 127-885 | subatm.⁻¹ | 0.5-50 |
| | | (atm.-5 atm.) | |
| Oligomerization | 232-649² | 0.1-50 atm.^{2,3} | 0.2-50² |
| | 10-232⁴ | - | 0.05-20⁵ |
| | (27-204)⁴ | - | (0.1-10)⁵ |
| Paraffins to aromatics | 100-700 | 0-1000 psig | 0.5-40⁵ |
| Condensation of alcohols | 260-538 | 0.5-1000 psig | 0.5-50⁵ |
| Isomerization | 93-538 | 50-1000 psig | 1-10 |
| | (204-315) | | (1-4) |
| Xylene | 260-593² | 0.5-50 atm.² | 0.1-100⁵ |
| isomerization | (315-566)² | (1-5 atm)² | (0.5-50)⁵ |
| | 38-371⁴ | 1-200 atm.⁴ | 0.5-50 |

| | | | |
|---|---|---|---|
| ¹ Several hundred atmospheres ² Gas phase reaction ³ Hydrocarbon partial pressure ⁴ Liquid phase reaction ⁵ WHSV | | | |

Other reaction conditions and parameters are provided below.

### Hydrocracking

Using a catalyst which comprises SSZ-64, preferably predominantly in the hydrogen form, and a hydrogenation promoter, heavy petroleum residual feedstocks, cyclic stocks and other hydrocrackate charge stocks can be hydrocracked using the process conditions and catalyst components disclosed in the aforementioned U.S. Patent No. 4,910,006 and U.S. Patent No. 5,316,753.

The hydrocracking catalysts contain an effective amount of at least one hydrogenation component of the type commonly employed in hydrocracking catalysts. The hydrogenation component is generally selected from the group of hydrogenation catalysts consisting of one or more metals of Group VIB and Group VIII, including the salts, complexes and solutions containing such. The hydrogenation catalyst is preferably selected from the group of metals, salts and complexes thereof of the group consisting of at least one of platinum, palladium, rhodium, iridium, ruthenium and mixtures thereof or the group consisting of at least one of nickel, molybdenum, cobalt, tungsten, titanium, chromium and mixtures thereof. Reference to the catalytically active metal or metals is intended to encompass such metal or metals in the elemental state or in some form such as an oxide, sulfide, halide, carboxylate and the like. The hydrogenation catalyst is present in an effective amount to provide the hydrogenation function of the hydrocracking catalyst, and preferably in the range of from 0.05 to 25% by weight.

### Dewaxing

SSZ-64, preferably predominantly in the hydrogen form, can be used to dewax hydrocarbonaceous feeds by selectively removing straight chain paraffins. Typically, the viscosity index of the dewaxed product is improved (compared to the waxy feed) when the waxy feed is contacted with SSZ-64 under isomerization dewaxing conditions.

The catalytic dewaxing conditions are dependent in large measure on the feed used and upon the desired pour point. Hydrogen is preferably present in the reaction zone during the catalytic dewaxing process. The hydrogen to feed ratio is typically between about 500 and about 30,000 SCF/bbl (standard cubic feet per barrel), preferably about 1000 to about 20,000 SCF/bbl. Generally, hydrogen will be separated from the product and recycled to the reaction zone. Typical feedstocks include light gas oil, heavy gas oils and reduced crudes boiling above about 350°F.

A typical dewaxing process is the catalytic dewaxing of a hydrocarbon oil feedstock boiling above about 350°F and containing straight chain and slightly branched chain hydrocarbons by contacting the hydrocarbon oil feedstock in the presence of added hydrogen gas at a hydrogen pressure of about 15-3000 psi with a catalyst comprising SSZ-64 and at least one Group VIII metal.

The SSZ-64 hydrodewaxing catalyst may optionally contain a hydrogenation component of the type commonly employed in dewaxing catalysts. See the aforementioned U.S. Patent No. 4,910,006 and U.S. Patent No. 5,316,753 for examples of these hydrogenation components.

The hydrogenation component is present in an effective amount to provide an effective hydrodewaxing and hydroisomerization catalyst preferably in the range of from about 0.05 to 5% by weight. The catalyst may be run in such a mode to increase isodewaxing at the expense of cracking reactions.

The feed may be hydrocracked, followed by dewaxing. This type of two stage process and typical hydrocracking conditions are described in U.S. Patent No. 4,921,594, issued May 1, 1990 to Miller,

SSZ-64 may also be utilized as a dewaxing catalyst in the form of a layered catalyst. That is, the catalyst comprises a first layer comprising zeolite SSZ-64 and at least one Group VIII metal, and a second layer comprising an aluminosilicate zeolite which is more shape selective than zeolite SSZ-64. The use of layered catalysts is disclosed in U.S. Patent No. 5,149,421, issued September 22, 1992 to Miller. The layering may also include a bed of SSZ-64 layered with a non-zeolitic component designed for either hydrocracking or hydrofinishing.

SSZ-64 may also be used to dewax raffinates, including bright stock, under conditions such as those disclosed in U. S. Patent No. 4,181,598, issued January 1, 1980 to Gillespie et al.,

It is often desirable to use mild hydrogenation (sometimes referred to as hydrofinishing) to produce more stable dewaxed products. The hydrofinishing step can be performed either before or after the dewaxing step, and preferably after. Hydrofinishing is typically conducted at temperatures ranging from about 190°C to about 340°C at pressures from about 400 psig to about 3000 psig at space velocities (LHSV) between about 0.1 and 20 and a hydrogen recycle rate of about 400 to 1500 SCF/bbl. The hydrogenation catalyst employed must be active enough not only to hydrogenate the olefins, diolefins and color bodies which may be present, but also to reduce the aromatic content. Suitable hydrogenation catalyst are disclosed in U. S. Patent No. 4,921,594, issued May 1, 1990 to Miller. The hydrofinishing step is beneficial in preparing an acceptably stable product (e.g., a lubricating oil) since dewaxed products prepared from hydrocracked stocks tend to be unstable to air and light and tend to form sludges spontaneously and quickly.

Lube oil may be prepared using SSZ-64. For example, a C₂₀₊ lube oil may be made by isomerizing a C₂₀₊ olefin feed over a catalyst comprising SSZ-64 in the hydrogen form and at least one Group VIII metal. Alternatively, the lubricating oil may be made by hydrocracking in a hydrocracking zone a hydrocarbonaceous feedstock to obtain an effluent comprising a hydrocracked oil, and catalytically dewaxing the effluent at a temperature of at least about 400°F and at a pressure of from about 15 psig to about 3000 psig in the presence of added hydrogen gas with a catalyst comprising SSZ-64 in the hydrogen form and at least one Group VIII metal.

### Aromatics Formation

SSZ-64 can be used to convert light straight run naphthas and similar mixtures to highly aromatic mixtures. Thus, normal and slightly branched chained hydrocarbons, preferably having a boiling range above about 40°C and less than about 200°C, can be converted to products having a substantial higher octane aromatics content by contacting the hydrocarbon feed with a catalyst comprising SSZ-64. It is also possible to convert heavier feeds into BTX or naphthalene derivatives of value using a catalyst comprising SSZ-64.

The conversion catalyst preferably contains a Group VIII metal compound to have sufficient activity for commercial use. By Group VIII metal compound as used herein is meant the metal itself or a compound thereof. The Group VIII noble metals and their compounds, platinum, palladium, and iridium, or combinations thereof can be used. Rhenium or tin or a mixture thereof may also be used in conjunction with the Group VIII metal compound and preferably a noble metal compound. The most preferred metal is platinum. The amount of Group VIII metal present in the conversion catalyst should be within the normal range of use in reforming catalysts, from about 0.05 to 2.0 weight percent, preferably 0.2 to 0.8 weight percent.

It is critical to the selective production of aromatics in useful quantities that the conversion catalyst be substantially free of acidity, for example, by neutralizing the zeolite with a basic metal, e.g., alkali metal, compound. Methods for rendering the catalyst free of acidity are known in the art. See the aforementioned U.S. Patent No. 4,910,006 and U.S. Patent No. 5,316,753 for a description of such methods.

The preferred alkali metals are sodium, potassium, rubidium and cesium. The zeolite itself can be substantially free of acidity only at very high silica:alumina mole ratios.

### Catalytic Cracking

Hydrocarbon cracking stocks can be catalytically cracked in the absence of hydrogen using SSZ-64, preferably predominantly in the hydrogen form.

When SSZ-64 is used as a catalytic cracking catalyst in the absence of hydrogen, the catalyst may be employed in conjunction with traditional cracking catalysts, e.g., any aluminosilicate heretofore employed as a component in cracking catalysts. Typically, these are large pore, crystalline aluminosilicates. Examples of these traditional cracking catalysts are disclosed in the aforementioned U.S. Patent No. 4,910,006 and U.S. Patent No 5,316,753. When a traditional cracking catalyst (TC) component is employed, the relative weight ratio of the TC to the SSZ-64 is generally between about 1:10 and about 500:1, desirably between about 1:10 and about 200:1, preferably between about 1:2 and about 50:1, and most preferably is between about 1:1 and about 20:1. The novel zeolite and/or the traditional cracking component may be further ion exchanged with rare earth ions to modify selectivity.

The cracking catalysts are typically employed with an inorganic oxide matrix component. See the aforementioned U.S. Patent No. 4,910,006 and U.S. Patent No. 5,316,753 for examples of such matrix components.

### Isomerization

The present catalyst is highly active and highly selective for isomerizing C₄ to C₇ hydrocarbons. The activity means that the catalyst can operate at relatively low temperature which thermodynamically favors highly branched paraffins. Consequently, the catalyst can produce a high octane product. The high selectivity means that a relatively high liquid yield can be achieved when the catalyst is run at a high octane.

The present process comprises contacting the isomerization catalyst, i.e., a catalyst comprising SSZ-64 in the hydrogen form, with a hydrocarbon feed under isomerization conditions. The feed is preferably a light straight run fraction, boiling within the range of 30°F to 250°F and preferably from 60°F to 200°F. Preferably, the hydrocarbon feed for the process comprises a substantial amount of C₄ to C₇ normal and slightly branched low octane hydrocarbons, more preferably C₅ and C₆ hydrocarbons.

It is preferable to carry out the isomerization reaction in the presence of hydrogen. Preferably, hydrogen is added to give a hydrogen to hydrocarbon ratio (H₂/HC) of between 0.5 and 10 H₂/HC, more preferably between 1 and 8 H₂/HC. See the aforementioned U.S. Patent No. 4,910,006 and U.S. Patent No. 5,316,753 for a further discussion of isomerization process conditions.

A low sulfur feed is especially preferred in the present process. The feed preferably contains less than 10 ppm, more preferably less than 1 ppm, and most preferably less than 0.1 ppm sulfur. In the case of a feed which is not already low in sulfur, acceptable levels can be reached by hydrogenating the feed in a presaturation zone with a hydrogenating catalyst which is resistant to sulfur poisoning. See the aforementioned U.S. Patent No. 4,910,006 and U.S. Patent No. 5,316,753 for a further discussion of this hydrodesulfurization process.

It is preferable to limit the nitrogen level and the water content of the feed. Catalysts and processes which are suitable for these purposes are known to those skilled in the art.

After a period of operation, the catalyst can become deactivated by sulfur or coke. See the aforementioned U.S. Patent No. 4,910,006 and U.S. Patent No. 5,316,753 for a further discussion of methods of removing this sulfur and coke, and of regenerating the catalyst.

The conversion catalyst preferably contains a Group VIII metal compound to have sufficient activity for commercial use. By Group VIII metal compound as used herein is meant the metal itself or a compound thereof. The Group VIII noble metals and their compounds, platinum, palladium, and iridium, or combinations thereof can be used. Rhenium and tin may also be used in conjunction with the noble metal. The most preferred metal is platinum. The amount of Group VIII metal present in the conversion catalyst should be within the normal range of use in isomerizing catalysts, from about 0.05 to 2.0 weight percent, preferably 0.2 to 0.8 weight percent.

### Alkylation and Transalkylation

SSZ-64 can be used in a process for the alkylation or transalkylation of an aromatic hydrocarbon. The process comprises contacting the aromatic hydrocarbon with a C₂ to C₁₆ olefin alkylating agent or a polyalkyl aromatic hydrocarbon transalkylating agent, under at least partial liquid phase conditions, and in the presence of a catalyst comprising SSZ-64.

SSZ-64 can also be used for removing benzene from gasoline by alkylating the benzene as described above and removing the alkylated product from the gasoline.

For high catalytic activity, the SSZ-64 zeolite should be predominantly in its hydrogen ion form. It is preferred that, after calcination, at least 80% of the cation sites are occupied by hydrogen ions and/or rare earth ions.

Examples of suitable aromatic hydrocarbon feedstocks which may be alkylated or transalkylated by the process of the invention include aromatic compounds such as benzene, toluene and xylene. The preferred aromatic hydrocarbon is benzene. There may be occasions where naphthalene or naphthalene derivatives such as dimethylnaphthalene may be desirable. Mixtures of aromatic hydrocarbons may also be employed.

Suitable olefins for the alkylation of the aromatic hydrocarbon are those containing 2 to 20, preferably 2 to 4, carbon atoms, such as ethylene, propylene, butene-1, trans-butene-2 and cis-butene-2, or mixtures thereof. There may be instances where pentenes are desirable. The preferred olefins are ethylene and propylene. Longer chain alpha olefins may be used as well.

When transalkylation is desired, the transalkylating agent is a polyalkyl aromatic hydrocarbon containing two or more alkyl groups that each may have from 2 to about 4 carbon atoms. For example, suitable polyalkyl aromatic hydrocarbons include di-, tri- and tetra-alkyl aromatic hydrocarbons, such as diethylbenzene, triethylbenzene, diethylmethylbenzene (diethyltoluene), di-isopropylbenzene, di-isopropyltoluene, dibutylbenzene, and the like. Preferred polyalkyl aromatic hydrocarbons are the dialkyl benzenes. A particularly preferred polyalkyl aromatic hydrocarbon is di-isopropylbenzene.

When alkylation is the process conducted, reaction conditions are as follows. The aromatic hydrocarbon feed should be present in stoichiometric excess. It is preferred that molar ratio of aromatics to olefins be greater than four-to-one to prevent rapid catalyst fouling. The reaction temperature may range from 100°F to 600°F, preferably 250°F to 450°F. The reaction pressure should be sufficient to maintain at least a partial liquid phase in order to retard catalyst fouling. This is typically 50 psig to 1000 psig depending on the feedstock and reaction temperature. Contact time may range from 10 seconds to 10 hours, but is usually from 5 minutes to an hour. The weight hourly space velocity (WHSV), in terms of grams (pounds) of aromatic hydrocarbon and olefin per gram (pound) of catalyst per hour, is generally within the range of about 0.5 to 50.

When transalkylation is the process conducted, the molar ratio of aromatic hydrocarbon will generally range from about 1:1 to 25:1, and preferably from about 2:1 to 20:1. The reaction temperature may range from about 100°F to 600°F, but it is preferably about 250°F to 450°F. The reaction pressure should be sufficient to maintain at least a partial liquid phase, typically in the range of about 50 psig to 1000 psig, preferably 300 psig to 600 psig. The weight hourly space velocity will range from about 0.1 to 10. U.S. Patent No. 5,082,990 issued on January 21, 1992 to Hsieh, et al.

### Conversion of Paraffins to Aromatics

SSZ-64 can be used to convert light gas C₂-C₆ paraffins to higher molecular weight hydrocarbons including aromatic compounds. Preferably, the zeolite will contain a catalyst metal or metal oxide wherein said metal is selected from the group consisting of Groups IB, IIB, VIII and IIIA of the Periodic Table. Preferably, the metal is gallium, niobium, indium or zinc in the range of from about 0.05 to 5% by weight.

### Xylene Isomerization

SSZ-64 may also be useful in a process for isomerizing one or more xylene isomers in a C₈ aromatic feed to obtain ortho-, meta-, and para-xylene in a ratio approaching the equilibrium value. In particular, xylene isomerization is used in conjunction with a separate process to manufacture para-xylene. For example, a portion of the para-xylene in a mixed C₈ aromatics stream may be recovered by crystallization and centrifugation. The mother liquor from the crystallizer is then reacted under xylene isomerization conditions to restore ortho-, meta- and para-xylenes to a near equilibrium ratio. At the same time, part of the ethylbenzene in the mother liquor is converted to xylenes or to products which are easily separated by filtration. The isomerate is blended with fresh feed and the combined stream is distilled to remove heavy and light by-products. The resultant C₈ aromatics stream is then sent to the crystallizer to repeat the cycle.

Optionally, isomerization in the vapor phase is conducted in the presence of 3.0 to 30.0 moles of hydrogen per mole of alkylbenzene (e.g., ethylbenzene). If hydrogen is used, the catalyst should comprise about 0.1 to 2.0 wt.% of a hydrogenation/dehydrogenation component selected from Group VIII (of the Periodic Table) metal component, especially platinum or nickel. By Group VIII metal component is meant the metals and their compounds such as oxides and sulfides.

Optionally, the isomerization feed may contain 10 to 90 wt. of a diluent such as toluene, trimethylbenzene, naphthenes or paraffins.

### Oligomerization

It is expected that SSZ-64 can also be used to oligomerize straight and branched chain olefins having from about 2 to 21 and preferably 2-5 carbon atoms. The oligomers which are the products of the process are medium to heavy olefins which are useful for both fuels, i.e., gasoline or a gasoline blending stock and chemicals.

The oligomerization process comprises contacting the olefin feedstock in the gaseous or liquid phase with a catalyst comprising SSZ-64.

The zeolite can have the original cations associated therewith replaced by a wide variety of other cations according to techniques well known in the art. Typical cations would include hydrogen, ammonium and metal cations including mixtures of the same. Of the replacing metallic cations, particular preference is given to cations of metals such as rare earth metals, manganese, calcium, as well as metals of Group II of the Periodic Table, e.g., zinc, and Group VIII of the Periodic Table, e.g., nickel. One of the prime requisites is that the zeolite have a fairly low aromatization activity, i.e., in which the amount of aromatics produced is not more than about 20% by weight. This is accomplished by using a zeolite with controlled acid activity [alpha value] of from about 0.1 to about 120, preferably from about 0.1 to about 100, as measured by its ability to crack n-hexane.

Alpha values are defined by a standard test known in the art, e.g., as shown in U.S. Patent No. 3,960,978 issued on June 1, 1976 to Givens et al. If required, such zeolites may be obtained by steaming, by use in a conversion process or by any other method which may occur to one skilled in this art.

### Condensation of Alcohols

SSZ-64 can be used to condense lower aliphatic alcohols having 1 to 10 carbon atoms to a gasoline boiling point hydrocarbon product comprising mixed aliphatic and aromatic hydrocarbon. The process disclosed in U.S. Patent No. 3,894,107, issued July 8, 1975 to Butter et al., describes the process conditions used in this process.

The catalyst may be in the hydrogen form or may be base exchanged or impregnated to contain ammonium or a metal cation complement, preferably in the range of from about 0.05 to 5% by weight. The metal cations that may be present include any of the metals of the Groups I through VIII of the Periodic Table. However, in the case of Group IA metals, the cation content should in no case be so large as to effectively inactivate the catalyst, nor should the exchange be such as to eliminate all acidity. There may be other processes involving treatment of oxygenated substrates where a basic catalyst is desired.

### Methane Upgrading

Higher molecular weight hydrocarbons can be formed from lower molecular weight hydrocarbons by contacting the lower molecular weight hydrocarbon with a catalyst comprising SSZ-64 and a metal or metal compound capable of converting the lower molecular weight hydrocarbon to a higher molecular weight hydrocarbon. Examples of such reactions include the conversion of methane to C₂₊ hydrocarbons such as ethylene or benzene or both. Examples of useful metals and metal compounds include lanthanide and or actinide metals or metal compounds.

These reactions, the metals or metal compounds employed and the conditions under which they can be run are disclosed in U.S. Patents No. 4,734,537, issued March 29, 1988 to Devries et al.; 4,939,311, issued July 3, 1990 to Washecheck et al.; 4,962,261, issued October 9, 1990 to Abrevaya et al.; 5,095,161, issued March 10, 1992 to Abrevaya et al.; 5,105,044, issued April 14, 1992 to Han et al.; 5,105,046, issued April 14, 1992 to Washecheck; 5,238,898, issued August 24, 1993 to Han et al.; 5,321,185, issued June 14, 1994 to van der Vaart; and 5,336,825, issued August 9, 1994 to Choudhary et al.,

SSZ-64 may be used for the catalytic reduction of the oxides of nitrogen in a gas stream. Typically, the gas stream also contains oxygen, often a stoichiometric excess thereof. Also, the SSZ-64 may contain a metal or metal-ions within or on it which are capable of catalyzing the reduction of the nitrogen oxides. Examples of such metals or metal ions include copper, cobalt and mixtures thereof.

One example of such a process for the catalytic reduction of oxides of nitrogen in the presence of a zeolite is disclosed in U.S. Patent No. 4,297,328, issued October 27, 1981 to Ritscher et al., There, the catalytic process is the combustion of carbon monoxide and hydrocarbons and the catalytic reduction of the oxides of nitrogen contained in a gas stream, such as the exhaust gas from an internal combustion engine. The zeolite used is metal ion-exchanged, doped or loaded sufficiently so as to provide an effective amount of catalytic copper metal or copper ions within or on the zeolite. In addition, the process is conducted in an excess of oxidant, e.g., oxygen.

### EXAMPLES

The following examples demonstrate but do not limit the present invention.

### Example 1

### Synthesis of the Structure-Directing Agent A (N-cyclobutylmethyl-N-ethylhexamethyleneiminium cation)

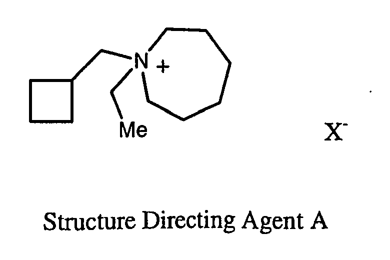

The anion (X⁻) associated with the cation may be any anion which is not detrimental to the formation of the zeolite. Representative anions include halogen, e.g., fluoride, chloride, bromide and iodide, hydroxide, acetate, sulfate, tetrafluoroborate, carboxylate, and the like. Hydroxide is the most preferred anion.

The structure-directing agent (SDA) N-cyclobutylmethyl-N-ethylhexamethyleneiminium cation was synthesized according to the procedure described below (see Scheme 1). To a solution of hexamethyleneimine (78.5 gm; 0.84 mol.), triethylamine (106gm; 1.05 mol.) in 750 ml anhydrous benzene (or hexane) in a three-necked flask, cyclopentanecarbonyl chloride (100 gm; 0.84 mol.) dissolved in 100 ml anhydrous benzene was added drop-wise via an addition funnel (under a nitrogen atmosphere). The addition was carried out at 0 °C (ice bath) with mechanical stirring. Once the addition was completed, the ice-bath was removed and the resulting mixture was allowed to further stir overnight. The resulting slush (tan in color) was diluted with an equal volume of ethyl acetate, transferred to a separatory funnel and washed with water (3x500 ml) and with brine (300 ml). The organic layer was dried over anhydrous MgSO₄, filtered and concentrated at reduced pressure on a rotary evaporator to give 150 gm (98% yield) of the desired amide (indicated by NMR analysis) as a reddish brown gel-like material, which solidifies on standing at room temperature to a tan solid.

### Reduction of the precursor amide to the corresponding N-cyclobutylmethylhexamethyleneimine

To a suspension of lithium aluminum hydride (52 gm; 1.4 mol.) in tetrahydrofuran (1100 mL) at 0 °C (by means of an ice-bath) in 3-Liter three-necked flask, the amide (100 gm; 0.55 mol.) dissolved in 250 ml THF was added drop-wise (via an addition funnel) with mechanical stirring. Once the amide was all added, the ice-bath was replaced with a heating mantle, and the reaction mixture was heated to reflux overnight. The heating mantle was replaced with an ice-bath and the reaction mixture was diluted with 400 mL diethyl ether. The reaction was worked up by adding 200 ml of 15% NaOH solution drop-wise under vigorous stirring. Once the addition of the NaOH solution was completed, the gray reaction mixture turned to a colorless liquid with a white precipitate. The mixture was filtered and the filtrate was dried over MgSO₄. Filtration and concentration of the filtrate at reduced pressure on a rotary evaporator gave 89 gm (97% yield) of the desired amine (N-cyclobutylmethyl-N-ethylhexamethyleneimine).

### Quaternization of N-cyclobutylmethylhexamethyleneimine with ethyl iodide (Synthesis of N-cyclobutylmethyl-N-ethylhexamethyleneiminium cation)

To a solution of 50 gm (0.3 mol.) of N-cyclobutylmethylhexamethyleneimine in 600 ml anhydrous methanol, 94 gm (0.6 mol.) of ethyl iodide was added. The reaction was mechanically stirred for 48 hours at room temperature. Then, an additional equivalent of ethyl iodide (47 gm) was added and the reaction was further stirred at room temperature for an additional 48 hours. The reaction mixture was concentrated under reduced pressure on a rotary evaporator to give 91 gms of the iodide salt as an off-white-colored solid material. This iodide salt was purified by recrystallization. This was done by completely dissolving the iodide salt in acetone and then precipitating by the addition of ethyl ether to the acetone solution. The procedure gave 87 gm of white powder with very clean ¹H and ¹³C NMR spectra for the product (N-cyclobutylmethyl-N-ethylhexamethyleneiminium iodide).

### Ion Exchange (Synthesis of N-cyclobutylmethyl-N-ethylhexamethyleneiminium Hydroxide)

N-cyclobutylmethyl-N-ethylhexamethyleneiminium iodide (85gm; 0.26mol) was dissolved in 300 ml water in a 500-ml volume plastic bottle. To the solution, 300 gm of Ion-Exchange Resin-OH (BIO RAD^{®} AH1-X8) was added and the mixture was stirred at room temperature overnight. The mixture was filtered and the solids were rinsed with an additional 85 ml of water. The reaction afforded 0.24 mole of the structure directing agent (N-cyclobutylmethyl-N-ethylhexamethyleneiminium hydroxide) as indicated by titration analysis with 0.1N HCl on a small aliquot taken from the filtrate.

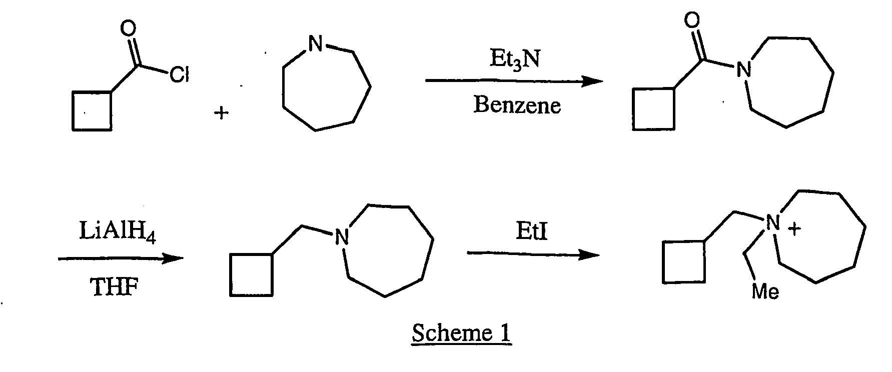

### Example 2

### Synthesis of Structure Directing Agent B N-cyclobutylmethyl-N-ethylheptamethyleneiminium cation

Using the synthetic scheme described above, N-cyclobutylmethyl-N-ethylheptamethyleneiminium cation (structure directing agent B) was prepared starting from cyclobutanecarbonyl chloride and heptamethyleneimine.

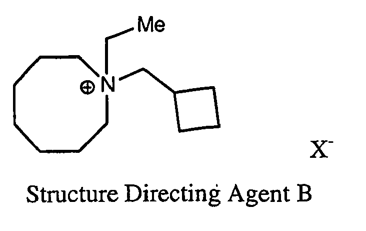

### Example 3

### Synthesis of Boron-SSZ-64

A 23 cc Teflon liner was charged with 4.8 gm of 0.62M aqueous solution of N-cyclobutylmethyl-N-ethylhexamethyleneiminium hydroxide (3 mmol SDA), 1.0 gm of 1M aqueous solution of NaOH (1 mmol NaOH) and 6.2 gm of de-ionized water. To this mixture, 0.06 gm of sodium borate decahydrate (0.157 mmol of Na2B₄O₇.10H₂O; ∼0.315 mmol B₂O₃) was added and stirred until completely dissolved. Then, 0.9 gm of CAB-O-SIL M 5^{®} fumed silica (∼14.7 mmol SiO₂) was added to the solution and the mixture was thoroughly stirred with a Teflon spatula by hand. The resulting gel was capped off and placed in a Parr steel autoclave reactor and heated in an oven at 160 °C while rotating at 43 rpm. The reaction was monitored by checking the gel's pH, and by looking for crystal formation using Scanning Electron Microscopy (SEM) at six day intervals. The reaction was completed after heating for 12 days at the conditions described above. Once the crystallization was complete, the starting reaction gel turned to a clear liquid layer with fine powdery solids precipitated. The mixture was filtered through a fritted-glass funnel. The collected solids were thoroughly washed with water and then rinsed with acetone (-20 ml) to remove any organic residues. The solids were allowed to air-dry over night and then dried in an oven at 120 °C for 1hour. The reaction afforded 0.88 gram of SSZ-64. X-ray and IR analysis of the powder indicated the product to be SSZ-64.

### Example 4

### Conversion of Boron-SSZ-64 to Aluminum-SSZ-64

Boron SSZ-64 synthesized as described in Example 3 above and calcined as shown in Example 17 below was suspended in 1M solution of aluminum nitrate nonahydrate (15 ml of 1M Al(NO₃)₃.9H₂O soln./1 gm zeolite). The suspension was heated at reflux for 48 hours. The mixture was then filtered and the collected solids were thoroughly rinsed with water and air-dried overnight. The solids were further dried in an oven at 120 °C for 2 hours.

### Examples 5-16

### Synthesis of SSZ-64 at Varying SiO₂/B₂O₃ Ratios

SSZ-64 was synthesized at varying SiO₂/B₂O₃ ratios in the starting synthesis gel. This was accomplished using the synthetic conditions described in Example 3 keeping everything the same while changing the SiO₂/B₂O₃ ratios in the starting gel. This was done by keeping the amount of CABO-SIL M5 (the source of SiO₂) the same while varying the amount of sodium borate decahydrates in each run. Consequently, varying the amount of sodium borate decahydrates led to varying the SiO₂/Na ratios in the starting gels. The table below shows the varying SiO₂B₂O₃ and SiO₂/Na ratios, and the crystallization products.

| Example No. | SiO₂B₂O₃ | SiO₂/Na | Crystallization Time(days) | Products |
|---|---|---|---|---|
| 5 | α | 14.7 | 21 | MEL (ZSM-11), Layered |
| 6 | 280 | 13.9 | 18 | MEL, SSZ-64 & layered |
| 7 | 140 | 13.3 | 15 | SSZ-64 |
| 8 | 93 | 12.7 | 15 | SSZ-64 |
| 9 | 70 | 12.1 | 15 | SSZ-64 |
| 10 | 56 | 11.6 | 12 | SSZ-64 |
| 11 | 47 | 11.2 | 12 | SSZ-64 |
| 12 | 40 | 10.7 | 12 | SSZ-64 |
| 13 | 31 | 10 | 12 | SSZ-64 |
| 14 | 23 | 9 | 12 | SSZ-64 |
| 15 | 19 | 8.2 | 6 | SSZ-64 |
| 16 | 14 | 7.1 | 6 | SSZ-64 |

| | | | | |
|---|---|---|---|---|
| SiO₂/⁻OH=3.7, SiO₂/R⁺=4.9, H₂O/SiO₂=44 (R⁺= SDA) | | | | |

### Example 17

### Calcination of SSZ-64

The material from Example 3 is calcined in the following manner. A thin bed of material is heated in a muffle furnace from room temperature to 120°C at a rate of 1°C per minute and held at 120°C for three hours. The temperature is then ramped up to 540°C at the same rate and held at this temperature for 5 hours, after which it is increased to 594°C and held there for another 5 hours. A 50/50 mixture of air and nitrogen is passed over the SSZ-64 at a rate of 20 standard cubic feet per minute during heating.

### Example 18

### NH₄ Exchange

Ion exchange of calcined SSZ-64 material (prepared in Example 3 and calcined as in Example 17) is performed using NH₄NO₃ to convert the SSZ-64 from its Na⁺ form to the NH₄⁺ form, and, ultimately, the H⁺ form. Typically, the same mass of NH₄NO₃ as SSZ-64 is slurried in water at a ratio of 25-50:1 water toSSZ-64. The exchange solution is heated at 95°C for 2 hours and then filtered. This procedure can be repeated up to three times. Following the final exchange, the SSZ-64 is washed several times with water and dried. This NH₄⁺ form of SSZ-64 can then be converted to the H⁺ form by calcination (as described in Example 17) to 540°C.

### Example 19

### Constraint Index Determination

The hydrogen form of the SSZ-64 of Example 3 (after treatment according to Examples 17, 4 and 18) is pelletized at 2-3 KPSI, crushed and meshed to 20-40, and then > 0.50 gram is calcined at about 540°C in air for four hours and cooled in a desiccator. 0.50 Gram is packed into a 3/8 inch stainless steel tube with alundum on both sides of the molecular sieve bed. A Lindburg furnace is used to heat the reactor tube. Helium is introduced into the reactor tube at 10 cc/min. and at atmospheric pressure. The reactor is heated to about 315°C, and a 50/50 (w/w) feed of n-hexane and 3-methylpentane is introduced into the reactor at a rate of 8 µl/min. Feed delivery is made via a Brownlee pump. Direct sampling into a gas chromatograph begins after 10 minutes of feed introduction. The Constraint Index value is calculated from the gas chromatographic data using methods known in the art. SSZ-64 has a Constraint Index of 0.7 after 10 minutes at 315 °C with 96% feed conversion. The Constraint Index dropped with time on stream (0.25 @ 100 minutes) suggesting a large pore molecular sieve.

### Example 20

### Hydrocracking of n-Hexadecane

A sample of SSZ-64 as prepared in Example 3 was treated as in Examples 17, 4 and 18. Then a sample was slurried in water and the pH of the slurry was adjusted to a pH of ∼10 with dilute ammonium hydroxide. To the slurry was added a solution of Pd(NH₃)₄(NO₃)₂ at a concentration which would provide 0.5 wt. % Pd with respect to the dry weight of the molecular sieve sample. This slurry was stirred for 48 hours at 100°C. After cooling, the slurry was filtered through a glass frit, washed with de-ionized water, and dried at 100°C. The catalyst was then calcined slowly up to 482°C (900°F) in air and held there for three hours.

The calcined catalyst was pelletized in a Carver Press and crushed to yield particles with a 20/40 mesh size range. Sized catalyst (0.5 g) was packed into a¼ inch OD tubing reactor in a micro unit for n-hexadecane hydroconversion. The table below gives the run conditions and the products data for the hydrocracking test on n-hexadecane. After the catalyst was tested with n-hexadecane, it was titrated using a solution of butyl amine in hexane. The temperature was increased and the conversion and product data evaluated again under titrated conditions. The results shown in the table below show that SSZ-64 is effective as a hydrocracking catalyst.

| Temperature | 260°C (500°F) | 260°C (550°F) |
|---|---|---|
| Time-on-Stream (hrs.) | 8.1-9.1 | 141.1-152.6 |
| WHSV | 1.55 | 1.55 |
| PSIG | 1200 | 1200 |
| Titrated? | No | Yes |
| n-16, % Conversion | 100 | 92.7 |
| Hydrocracking Conv. | 100 | 22 |
| Isomerization Selectivity, | % - | 72 |
| Cracking Selectivity, % | 100 | 31.6 |
| C4-, % | 18.8 | 1.05 |
| C5/C4 | 4.3 | 17 |
| C5+C6/C5, % | 54 | 16.3 |
| DMB/MP | 0.1 | 0.05 |
| C4-C13 i/n | 4.8 | 3.6 |
| C7-C13 yield | 37 | 16 |

### Example 21

### Argon Adsorption Analysis

SSZ-64 has a micropore volume of 0.21 cc/gm based on argon adsorption isotherm at 87.3 K recorded on ASAP 2010 equipment from Micromerities. The low-pressure dose was 2.00 cm³/g (STP) with 15-s equilibration interval. The argon adsorption isotherm was analyzed using the density function theory (DFT) formalism and parameters developed for activated carbon slits by Olivier (Porous Mater. 1995, 2, 9) using the Saito Foley adaptation of the Horvarth-Kawazoe formalism (Microporous Materials, 1995, 3, 531) and the conventional t-plot method (J. Catalysis, 1965, 4, 319). The DFT analysis also showed that SSZ-64 has a maximum pore width of 8 Angstroms.

## Claims

1. A molecular sieve having a mole ratio greater than 15 of an oxide of a first tetravalent element to an oxide of a second tetravalent element which is different from said first tetravalent element, trivalent element, pentavalent element or mixture thereof and having, after calcination, the X-ray diffraction
as shown in the following table:
| 2 Theta | d-spacing (Ǻ) | Relative intensity (%) |
|---|---|---|
| 6.62 ± 0.2 | 13.34 | VS |
| 7.44 ± 0.2 | 11.87 | S |
| 8.42 ± 0.2 | 10.49 | M |
| 14.54 ± 0.2 | 6.09 | W |
| 14.98 ± 0.2 | 5.91 | W |
| 21.28 ± 0.2 | 4.17 | W |
| 22.58 ± 0.2 | 3.93 | VS |
| 25.48 ± 0.2 | 3.49 | M-S |
| 26.58 ± 0.2 | 3.35 | W |
| 28.34 ± 0.2 | 3.15 | W |

2. A molecular sieve having a mole ratio greater than 15 of an oxide selected from the group consisting of silicon oxide, germanium oxide and mixtures thereof to an oxide selected from aluminum oxide, gallium oxide, iron oxide, boron oxide, titanium oxide, indium oxide, vanadium oxide and mixtures thereof, and having, after calcination, the X-ray diffraction lines as shown in the following table:
| 2 Theta | d-spacing (Ǻ) | Relative intensity (%) |
|---|---|---|
| 6.62 ± 0.2 | 13.34 | VS |
| 7.44 ± 0.2 | 11.87 | S |
| 8.42 ± 0.2 | 10.49 | M |
| 14.54 ± 0.2 | 6.09 | W |
| 14.98 ± 0.2 | 5.91 | W |
| 21.28 ± 0.2 | 4.17 | W |
| 22.58 ± 0.2 | 3.93 | VS |
| 25.48 ± 0.2 | 3.49 | M-S |
| 26.58 ± 0.2 | 3.35 | W |
| 28.34 ± 0.2 | 3.15 | W |

3. A molecular sieve according to Claim 2 wherein the oxides comprise silicon oxide and aluminum oxide.

4. A molecular sieve according to Claim 2 wherein the oxides comprise silicon oxide and boron oxide.

5. A molecular sieve according to Claim 1 wherein said molecular sieve is predominantly in the hydrogen form.

6. A molecular sieve according to Claim 1 wherein said molecular sieve is substantially free of acidity.

7. A molecular sieve having a composition, as synthesized and in the anhydrous state, in terms of mole ratios as follows:
| | |
|---|---|
| YO₂/W_{c}O_{d} | 15-180 |
| M_{2/n}/YO₂ | 0.01-0.03 |
| Q/YO₂ | 0.02 - 0.05 |
wherein Y is silicon, germanium or a mixture thereof; W is aluminum, gallium, iron, boron, titanium, indium, vanadium or mixtures thereof; c is 1 or 2; d is 2 when c is 1 or d is 3 or 5 when c is 2; M is an alkali metal cation, alkaline earth metal cation or mixtures thereof; n is the valence of M; and Q is a N-cyclobutylmethyl-N-ethylhexamethylenciminium cation or N-cyclobntylmethyl-N-ethylheptamethyleneiminium cation.

8. A molecular sieve according to Claim 7 wherein W is aluminum and Y is silicon.

9. A molecular sieve according to Claim 7 wherein W is boron and Y is silicon.

10. A molecular sieve according to Claim 7 wherein Q is a N-cyclobutylmethyl-N-ethylhexamethyleneiminium cation.

11. A molecular sieve according to Claim 7 wherein Q is a N-cyclobutymethyl-N-ethylheptamethyleneiminium cation.

12. A method of preparing a crystalline material comprising an oxide of a first tetravalent element and an oxide of a second tetravalent element which is different from said first tetravalent element, trivalent element, pentavalent element or mixture thereof, said method comprising contacting under crystallization conditions sources of said oxides and a structure directing agent comprising a N-cyclobutylmethyl-N-ethylhexamethyleneiminium cation or N-cyclobutylmethyl-N-ethylheptamethyleneiminium cation; wherein the crystalline material has, after calcination, the X-ray diffraction pattern as shown in the following table:
| 2 Theta | d-spacing (Ǻ) | Relative intensity (%) |
|---|---|---|
| 6.62 ± 0.2 | 13.34 | VS |
| 7.44 ± 0.2 | 11.87 | S |
| 8.42 ± 0.2 | 10.49 | M |
| 14.54 ± 0.2 | 6.09 | W |
| 14.98 ± 0.2 | 5.91 | W |
| 21.28 ± 0.2 | 4.17 | W |
| 22.58 ± 0.2 | 3.93 | VS |
| 25.48 ± 0.2 | 3.49 | M-S |
| 26.58 ± 0.2 | 3.35 | W |
| 28.34 ± 0.2 | 3.15 | W |

13. The method according to Claim 12 wherein the first tetravalent element is selected from the group consisting of silicon, germanium and combinations thereof.

14. The method according to Claim 12 wherein the second tetravalent element, trivalent element or pentavalent element is selected from the group consisting of aluminum, gallium, iron, boron, titanium, indium, vanadium and combination thereof.

15. The method according to Claim 14 wherein the second tetravalent element or trivalent element is selected from the group consisting of aluminum, boron, titanium and combinations thereof.

16. The method according to Claim 15 wherein the first tetravalent element is silicon.

17. The method of Claim 12 wherein the structure directing agent is a N-cyclobutylmethyl-N-ethylhexamethyleneiminium cation.

18. The method of Claim 12 wherein the structure directing agent is a N-cyclobutylmetllyl-N-ethylheptamethylenciminium cation.

19. A process for converting hydrocarbons comprising contacting a hydrocarbonaceous feed at hydrocarbon converting conditions with a catalyst comprising a zeolite having a mole ratio greater than 15 of an oxide of a first tetravalent element to an oxide of a second tetravalent element which is different from said first tetravalent element, trivalent, element, pentavalent element or mixture thereof and having, after calcination, the X-ray diffraction lines as shown in the following stable:
| 2 Theta | d-spacing (Ǻ) | Relative intensity (%) |
|---|---|---|
| 6.62 ± 0.2 | 13.34 | VS |
| 7.44 ± 0.2 | 11.87 | S |
| 8.42 ± 0.2 | 10.49 | M |
| 14.54 ± 0.2 | 6.09 | W |
| 14.98 ± 0.2 | 5.91 | W |
| 21.28 ± 0.2 | 4.17 | W |
| 22.58 ± 0.2 | 3.93 | VS |
| 25.48 ± 0.2 | 3.49 | M-S |
| 26.58 ± 0.2 | 3.35 | W |
| 28.34 ± 0.2 | 3.15 | W |

20. The process of Claim 19 wherein the zeolite is substantially free of acidity.

21. The process of Claim 19 wherein the process is a hydrocracking process comprising contacting the catalyst with a hydrocarbon feedstock under hydrocracking conditions.

22. The process of Claim 19 wherein the process is a dewaxing process comprising contacting the catalyst with a hydrocarbon feedstock under dewaxing conditions.

23. The process of Claim 19 wherein the process is a process for improving the viscosity index of a dewaxed product of waxy hydrocarbon feeds comprising contacting the catalyst with a waxy hydrocarbon feed under isomerization dewaxing conditions.

24. The process of Claim 19 wherein the process is a process for producing a C₂₀₊ lube oil from a C₂₀₊ olefin feed comprising isomerizing said olefin feed under isomerization conditions over the catalyst.

25. The process of Claim 19 wherein the process is a process for catalytically dewaxing a hydrocarbon oil feedstock boiling above 350°F (177°C) and containing straight chain and slightly branched chain hydrocarbons comprising contacting said hydrocarbon oil feedstock in the presence of added hydrogen gas at a hydrogen pressure of 15-3000 psi (103 - 20,684 kPa) under dewaxing conditions with the catalyst.

26. The process of Claim 25 wherein said catalyst comprises a layered catalyst comprising a first layer comprising the zeolite and at least one Group VIII metal, and a second layer comprising an aluminosilicate zeolite which is more shape selective than the zeolite of said first layer.

27. The process of Claim 19 wherein the process is a process for preparing a lubricating oil which comprises:
hydrocracking in a hydrocracking zone a hydrocarbonaceous feedstock to obtain an effluent comprising a hydrocracked oil; and
catalytically dewaxing said effluent comprising hydrocracked oil at a temperature of at least 400°F (204°C) and at a pressure of from 15 psig to 3000 psig (103 - 20,684 kPa) in the presence of added hydrogen gas with the catalyst.

28. The process of Claim 19 wherein the process is a process for isomerization dewaxing a raffinate comprising contacting said raffinate in the presence of added hydrogen under isomerization dewaxing conditions with the catalyst.

29. The process of Claim 28 wherein the raffinate is bright stock.

30. The process of Claim 19 wherein the process is a process for increasing the octane of a hydrocarbon feedstock to produce a product having an increased aromatics content comprising contacting a hydrocarbonaceous feedstock which comprises normal and slightly branched hydrocarbons having a boiling range above 40°C and less than 200°C under aromatic Conversion conditions with the catalyst.

31. The process of Claim 30 wherein the zeolite is substantially free of acid.

32. The process of Claim 19 wherein the process is a catalytic cracking process comprising contacting a hydrocarbon feedstock in a reaction zone under catalytic cracking conditions in the absence of added hydrogen with the catalyst.

33. The process of Claim 32 wherein the catalyst additionally comprises a large pore crystalline cracking component.

34. The process of Claim 19 wherein the process is an isomerization process for isomerizing C₄ to C₇ hydrocarbons, comprising contacting a feed having normal and slightly branched C₄ to C₇ hydrocarbons under isomerizing conditions with the catalyst.

35. The process of Claim 34 wherein the zeolite has been impregnated with at least one Group VIII metal.

36. The process of Claim 34 wherein the catalyst has been calcined in a steam/air mixture at an elevated temperature after impregnation of the Group VIII metal.

37. The process of Claim 36 wherein the Group VIII metal is platinum.

38. The process of Claim 19 wheiein the process is a process for alkylating an aromatic hydrocarbon which comprises contacting under alkylation conditions at least a molar excess of an aromatic hydrocarbon with a C₂ to C₂₀ olefin under at leat partial liquid phase conditions and in the presence of the catalyst.

39. The process of Claim 38 wherein the olefin is a C₂ to C₄ olefin.

40. The process of Claim 39 wherein the aromatic hydrocarbon and olefin are present in a molar ratio of 4:1 to 20:1, respectively.

41. The process of Claim 39 wherein the aromatic hydrocarbon is selected from the group consisting of benzene, toluene, ethylbenzene, xylene, naphthalene, naphthalene derivatives, dimethylnaphthalene or mixtures thereof.

42. The process of Claim 19 wherein the process is a process for transalkylating an aromatic hydrocarbon which comprises contacting under transalkylating conditions an aromatic hydrocarbon with a polyalkyl aromatic hydrocarbon under at least partial liquid phase conditions and in the presence of the catalyst.

43. The process of Claim 42 wherein the aromatic hydrocarbon and the polyalkyl aromatic hydrocarbon are present in a molar ratio of from 1:1. to 25:1, respectively.

44. The process of Claim 42 wherein the aromatic hydrocarbon is selected from the group consisting of benzene, toluene, ethylbenzene, xylene, or mixtures thereof.

45. The process of Claim 42 wherein the polyalkyl aromatic hydrocarbon is a dialkylbenzene.

46. The process of Claim 19 wherein the process is a process to convert paraffins to aromatics which comprises contacting paraffins under conditions which cause paraffins to convert to aromatics with a catalyst comprising the zeolite and gallium, zinc, or a compound of gallium or zinc.

47. The process of Claim 19 wherein the process is a process for isomerizing olefins comprising contacting said olefin under conditions which cause isomerization of the olefin with the catalyst.

48. The process of Claim 19 wherein the process is a process for isomerizing an isomerization feed comprising an aromatic C₈ stream of xylene isomers or mixtures of xylene isomers and ethylbenzene, wherein a more nearly equilibrium ratio of ortho-, meta and para-xylenes is obtained, said process comprising contacting said feed under isomerization conditions with the catalyst.

49. The process of Claim 19 wherein the process is a process for oligomerizing olefins comprising contacting an olefin feed under oligomerization conditions with the catalyst.

50. The process of claim 19, wherein the process is a process for converting lower alcohols and other oxygenated hydrocarbons comprising contacting said lower alcohol or other oxygenated hydrocarbon under conditions to produce liquid products with a catalyst comprising a zeolite having a mole ratio greater than 15 of an oxide or a first tetravalent element to an oxide of a second tetravalent element which is different from said first tetravalent element, trivalent element, pentavalent element or mixture thereof and having, after calcination, the X-ray diffraction lines as shown in the following table:
| 2 Theta | d-spacing (Ǻ) | Relative intensity (%) |
|---|---|---|
| 6.62 ± 0.2 | 13.34 | VS |
| 7.44 ± 0.2 | 11.87 | S |
| 8.42 ± 0.2 | 10.49 | M |
| 14.54 ± 0.2 | 6.09 | W |
| 14.98 ± 0.2 | 5.91 | W |
| 21.28 ± 0.2 | 4.17 | W |
| 22.58 ± 0.2 | 3.93 | VS |
| 25.48 ± 0.2 | 3.49 | M-S |
| 26.58 ± 0.2 | 3.35 | W |
| 28.34 ± 0.2 | 3.15 | W |

51. The process of Claim 19 wherein the process is a process for the production of higher molecular weight hydrocarbons from lower molecular weight hydrocarbons comprising the steps of:
(a) introducing into a reaction zone a lower molecular weight hydrocarbon-containing gas and contacting said gas in said zone under C₂₊ hydrocarbon synthesis conditions with the catalyst and a metal or metal compound capable of converting the lower molecular weight hydrocarbon to a higher molecular weight hydrocarbon; and
(b) withdrawing from said reaction zone a higher molecular weight hydrocarbon-containing stream.

52. The process of Claim 51 wherein the metal or metal compound comprises a lanthanide or actinide metal or metal compound.

53. The process of Claim 51 wherein the lower molecular weight hydrocarbon is methane.

54. The process of Claim 19, 21, 22. 23, 24. 25, 27, 28, 32, 34, 38 or 42 wherein the zeolites is predominantly in the hydrogen form.

55. The process of Claim 24, 25, 27, 28 or 30 wherein the catalyst further comprises at least one Group VIII metal.

56. A process for the reduction of oxides of nitrogen contained in a gas stream in the presence of oxygen wherein said process comprises contacting the gas stream with a zeolite, and wherein the zeolite has a mole ratio greater than 15 of an oxide of a first tetravalent element to an oxide of a second tetravalent element which is different from said first tetravalent element, trivalent element, pentavalent element or mixture thereof and has, after calcination, the X-tray diffraction lines as shown in the following table:
| 2 Theta | d-spacing (Ǻ) | Relative intensity (%) |
|---|---|---|
| 6.62 ± 0.2 | 13.34 | VS |
| 7.44 ± 0.2 | 11.87 | S |
| 8.42 ± 0.2 | 10.49 | M |
| 14.54 ± 0.2 | 6.09 | W |
| 14.98 ± 0.2 | 5.91 | W |
| 21.28 ± 0.2 | 4.17 | W |
| 22.58 ± 0.2 | 3.93 | VS |
| 25.48 ± 0.2 | 3.49 | M-S |
| 26.58 ± 0.2 | 3.35 | W |
| 28.34 ± 0.2 | 3.15 | W |

57. The process of Claim 56 wherein said zeolite contains a metal or metal ions capable of catalyzing the reduction of the oxides of nitrogen.

58. The process of Claim 57 wherein the metal is copper, cobalt or mixtures thereof.

59. The process of Claim 57 wherein the gas stream is the exhaust stream of an internal combustion engine.

## Patentansprüche

1. Molekularsieb mit einem Molarverhältnis größer als 15 von einem Oxyd eines ersten vierwertigen Elements zu einem Oxyd eines zweiten vierwertigen Elements, das sich vom ersten vierwertigen Element unterscheidet, eines dreiwertigen Elements, eines fünfwertigen Elements oder einer Mischung davon und mit, nach Calcinierung, der Röntgendiffraktion gemäß der folgendenTabelle:
| 2-Theta | d-spacing (Å) | Relative Intensität (%) |
|---|---|---|
| 6,62 ± 0,2 | 13,34 | sehr stark |
| 7,44 ± 0,2 | 11,87 | stark |
| 8,42 ± 0,2 | 10,49 | mittel |
| 14,54 ± 0,2 | 6,09 | schwach |
| 14,98 ± 0,2 | 5,91 | schwach |
| 21,28 ± 0,2 | 4,17 | schwach |
| 22,58 ± 0,2 | 3,93 | sehr stark |
| 25,48 ± 0,2 | 3,49 | mittel - stark |
| 26,58 ± 0,2 | 3,35 | schwach |
| 28,34 ± 0,2 | 3,15 | schwach |

2. Molekularsieb mit einem Molarverhältnis größer als 15 von einem Oxyd, ausgewählt aus der Gruppe Siliciumoxyd, Germaniumoxyd und Mischungen davon, zu einem Oxyd, ausgewählt aus Aluminiumoxyd, Galliumoxyd, Eisenoxyd, Boroxyd, Titanoxyd, Indiumoxyd, Vanadiumoxyd und Mischungen davon, und mit, nach Calcinierung, den Röntgendiffraktionslinien gemäß der folgenden Tabelle:
| 2-Theta | d-spacing (Å) | Relative Intensität (%) |
|---|---|---|
| 6,62 ± 0,2 | 13,34 | sehr stark |
| 7,44 ± 0,2 | 11,87 | stark |
| 8,42 ± 0,2 | 10,49 | mittel |
| 14,54 ± 0,2 | 6,09 | schwach |
| 14,98 ± 0,2 | 5,91 | schwach |
| 21,28 ± 0,2 | 4,17 | schwach |
| 22,58 ± 0,2 | 3,93 | sehr stark |
| 25,48 ± 0,2 | 3,49 | mittel - stark |
| 26,58 ± 0,2 | 3,35 | schwach |
| 28,34 ± 0,2 | 3,15 | schwach |

3. Molekularsieb gemäß Anspruch 2, wobei die Oxyde Siliciumoxyd und Aluminiumoxyd umfassen.

4. Molekularsieb gemäß Anspruch 2, wobei die Oxyde Siliciumoxyd und Boroxyd umfassen.

5. Molekularsieb gemäß Anspruch 1, wobei das Molekularsieb vorwiegend in der Wasserstoffform ist.

6. Molekularsieb gemäß Anspruch 1, wobei das Molekularsieb im Wesentlichen säurefrei ist.

7. Molekularsieb mit einer Zusammensetzung, synthetisiert und im anhydrierten Zustand, mit den folgenden Molarverhältnissen:
| | |
|---|---|
| YO₂/W_{c}O_{d} | 15-180 |
| M_{2/n}/YO₂ | 0,01 - 0,03 |
| O/YO₂ | 0,02-0,05 |
worin ist Y Silicium, Germanium oder eine Mischung davon; W Aluminium, Gallium, Eisen, Bor, Titan, Indium, Vanadium oder Mischungen davon; c 1 oder 2; d 2, wenn c 1 ist oder d 3 oder 5, wenn c 2 ist; M ein Alkalimetallkation, Alkalierdmetallkation oder Mischungen davon; n die Wertigkeit von M; und Q ein N-cyclobutylmethyl-N-ethylhexamethyleniminium-Ka t ion n oder N-cyclobutylmethyl-N-ethylheptamethyleniminium-Kation.

8. Molekularsieb gemäß Anspruch 7, wobei W Aluminium ist und Y Silicium.

9. Molekularsieb gemäß Anspruch 7, wobei W Bor ist und Y Silicium.

10. Molekularsieb gemäß Anspruch 7, wobei Q ein N-cyclobutylmethyl-N-ethylhexamethyleniminium-Kation ist.

11. Molekularsieb gemäß Anspruch 7, wobei Q ein N-cyclobutylmethyl-N-ethylheptamethyleniminium-Kation ist.

12. Herstellungsverfahren für einen kristallinen Werkstoff, umfassend ein Oxyd eines ersten vierwertigen Elements und ein Oxyd eines zweiten vierwertigen Elements, das sich vom ersten vierwertigen Element unterscheidet, eines dreiwertigen Elements, eines fünfwertigen Elements oder einer Mischung davon, das Verfahren umfassend Zusammenbringen unter Kristallisierungsbedingungen Quellen der Oxyde und ein Strukturführungsmittel, umfassend ein N-cyclobutylmethyl-N-ethylhexamethyleniminium-Kation oder ein N-cyclobutylmethyl-N-ethylheptamethyleniminium-Kation; wobei der kristalline Werkstoff nach Calcinierung das Röntgendiffraktionsmuster gemäß der folgenden Tabelle hat:
| 2-Theta | d-spacing (Å) | Relative Intensität (%) |
|---|---|---|
| 6,62 ± 0,2 | 13,34 | sehr stark |
| 7,44 ± 0,2 | 11,87 | stark |
| 8,42 ± 0,2 | 10,49 | mittel |
| 14,54 ± 0,2 | 6,09 | schwach |
| 14,98 ± 0,2 | 5,91 | schwach |
| 21,28 ± 0,2 | 4,17 | schwach |
| 22,58 ± 0,2 | 3,93 | sehr stark |
| 25,48 ± 0,2 | 3,49 | mittel - stark |
| 26,58 ± 0,2 | 3,35 | schwach |
| 28,34 ± 0,2 | 3,15 | schwach |

13. Herstellungsverfahren gemäß Anspruch 12, wobei das erste vierwertige Element ausgewählt ist aus der Gruppe Silicium, Germanium und Kombinationen davon.

14. Herstellungsverfahren gemäß Anspruch 12, wobei das zweite vierwertige Element, dreiwertige Element oder fünfwertige Element ausgewählt ist aus der Gruppe Aluminium, Gallium, Eisen, Bor, Titan, Indium, Vanadium und Kombinationen davon.

15. Herstellungsverfahren gemäß Anspruch 14, wobei das zweite vierwertige Element oder dreiwertige Element ausgewählt ist aus der Gruppe Aluminium, Bor, Titan und Kombinationen davon.

16. Herstellungsverfahren gemäß Anspruch 15, wobei das erste vierwertige Element Silicium ist.

17. Herstellungsverfahren gemäß Anspruch 12, wobei das Strukturführungsmittel ein N-cyclobutylmethyl-N-ethylhexamethyleniminium-Kation ist.

18. Herstellungsverfahren gemäß Anspruch 12, wobei das Strukturführungsmittel ein N-cyclobutylmethyl-N-ethylheptamethyleniminium-Kation ist.

19. Verfahren zum Umwandeln von Kohlenwasserstoffen, umfassend Zusammenbringen einer kohlenwasserstoffhaltigen Zufuhr bei Kohelnwasserstoff-Umwandlungsbedingungen mit einem Katalysator, umfassend ein Zeolith mit einem Molarverhältnis größer als 15 von einem Oxyd eines ersten vierwertigen Elements zu einem Oxyd eines zweiten vierwertigen Elements, das sich vom ersten vierwertigen Element unterscheidet, eines dreiwertigen Elements, eines fünfwertigen Elements oder einer Mischung davon und mit, nach Calcinierung, den Röntgendiffraktionslinien gemäß der Tabelle:
| 2-Theta | d-spacing (Å) | Relative Intensität (%) |
|---|---|---|
| 6,62 ± 0,2 | 13,34 | sehr stark |
| 7,44 ± 0,2 | 11,87 | stark |
| 8,42 ± 0,2 | 10,49 | mittel |
| 14,54 ± 0,2 | 6,09 | schwach |
| 14,98 ± 0,2 | 5,91 | schwach |
| 21,28 ± 0,2 | 4,17 | schwach |
| 22,58 ± 0,2 | 3,93 | sehr stark |
| 25,48 ± 0,2 | 3,49 | mittel - stark |
| 26,58 ± 0,2 | 3,35 | schwach |
| 28,34 ± 0,2 | 3,15 | schwach |

20. Verfahren gemäß Anspruch 19, wobei das Zeolith im Wesentlichen säurefrei ist.

21. Verfahren gemäß Anspruch 19, wobei das Verfahren ein Hydrocrack-Verfahren ist, umfassend Zusammenbringen des Katalysators mit einem Kohlenwasserstoff-Rohmaterial unter Hydrocrack-Bedingungen.

22. Verfahren gemäß Anspruch 19, wobei das Verfahren ein Entwachsungsverfahren ist, umfassend Zusammenbringen des Katalysators mit einem Kohlenwasserstoff-Rohmaterial unter Entwachsungsbedingungen.

23. Verfahren gemäß Anspruch 19, wobei das Verfahren ein Verfahren zur Verbesserung des Viskositätsindex eines entwachsten Produkts aus Kohlenwasserstoffzufuhren ist, umfassend Zusammenbringen des Katalysators mit einer Kohlenwasserstoffzufuhr unter Isomerisierungs-Entwachsungsbedingungen.

24. Verfahren gemäß Anspruch 19, wobei das Verfahren ein Herstellungsverfahren für ein C₂₀₊-Schmieröl aus einer C₂₀₊-Olefinzufuhr ist, umfassend Isomerisieren der Olefinzufuhr unter Isomerisierungsbedingungen über dem Katalysator.

25. Verfahren gemäß Anspruch 19, wobei das Verfahren ein Verfahren zum katalytischen Entwachsen eines Kohlenwasserstofföl-Rohmaterials ist mit Siedepunkt über 350°F (177°C), und enthaltend lineare und leicht verzweigte Kohlenwasserstoffe, umfassend Zusammenbringen des Kohlenwasserstofföl-Rohmaterials in Anwesenheit von zugesetztem Wasserstoffgas bei einem Wasserstoffdruck von 15 - 3000 psi (103 - 20.684 kPa) unter von 15 - 3000 psi (103 - 20.684 kPa) unter Entwachsungsbedingungen mit dem Katalysator.

26. Verfahren gemäß Anspruch 25, wobei der Katalysator einen Schichtkatalysator umfasst, umfassend eine erste Schicht mit dem Zeolith und mindestens einem Metall aus der Gruppe VIII, und eine zweite Schicht mit einem Aluminosilicat-Zeolith das stärker formselektiv ist als das Zeolith der ersten Schicht.

27. Verfahren gemäß Anspruch 19, wobei das Verfahren ein Herstellungsverfahren für ein Schmieröl ist, umfassend
in einem Hydrocrack-Bereich, Hydrocracken eines Kohlenwasserstoff-Rohmaterials zum Erhalt eines Ablaufs, umfassend ein hydrogecracktes Öl; und
katalytisches Entwachsen des Ablaufs, umfassend das hydrogecrackte Öl, bei einer Temperatur von mindestens 400°F (204°C) und einem Druck von 15 psig bis 3000 psig (103 - 20.486 kPa) in Anwesenheit von zugesetztem Wasserstoffgas mit dem Katalysator.

28. Verfahren gemäß Anspruch 19, wobei das Verfahren ein Verfahren zur Isomerisierungs-Entwachsung eines Raffinats ist, umfassend Zusammenbringen des Raffinats in der Anwesenheit von zugesetztem Wasserstoff unter Isomerisierungs-Entwachsungsbedingungen mit dem Katalysator.

29. Verfahren gemäß Anspruch 28, wobei das Raffinat Brightstock ist.

30. Verfahren gemäß Anspruch 19, wobei das Verfahren ein Verfahren zum Verbessern des Octans in einem Kohlenwasserstoff-Rohmaterial ist, zur Herstellung eines Produkts mit erhöhtem Aromatengehalt, umfassend Zusammenbringen einem kohlenwasserstoffhaltigen Rohmaterial mit normalen und leicht verzweigten Kohlenwasserstoffen und einem Siederbereicht über 40°C und unter 200°C unter aromatischen Umwandlungebedingungen mit dem Katalysator.

31. Verfahren gemäß Anspruch 30, wobei das Zeolith im Wesentlichen säurefrei ist.

32. Verfahren gemäß Anspruch 19, wobei das Verfahren ein katalytisches Crackverfahren ist, umfassend Zusammenbringen eines Kolenwasserstoff-Rohmaterials in einem Reaktionsbereich unter katalytischen Crackbedingungen unter Ausschluss von zugesetztem Wasserstoff mit dem Katalysator.

33. Verfahren gemäß Anspruch 32, wobei der Katalysator zudem eine großporige kristalline Crackkomponente umfasst.

34. Verfahren gemäß Anspruch 19, wobei das Verfahren ein Isomerisierungsverfahren für die Isomerisierung von C₄- bis C₇-Kohlenwasserstoffen ist, umfassend Zusammenbringen einer Zufuhr mit normalen oder leicht verzweigten C₄- bis C₇-Kohlenwasserstoffen unter Ismoerisationsbedingungen mit dem Katalysator.

35. Verfahren gemäß Anspruch 34, wobei das Zeolith mit mindestens einem Metall der Gruppe VIII imprägniert worden ist.

36. Verfahren gemäß Anspruch 34, wobei der Katalysator nach Imprägnierung mit dem Metall der Gruppe VIII bei erhöhter Temperatur in einem Dampf-LuftGemisch calciniert worden ist.

37. Verfahren gemäß Anspruch 35, wobei das Metall der Gruppe VII Platin ist.

38. Verfahren gemäß Anspruch 19, wobei das Verfahren ein Verfahren zur Alkylierung eines aromatischen Kohlenwasserstoffs ist, umfassend Zusammenbringen unter Alkylierungsbedingungen von mindestens einem molaren Überschuss eines aromatischen Kohlenwasserstoffs mit einem C₂- bis C₂₀-Olefin unter zumindest teilweise Flüssigphasen-Bedingungen und in der Anwesenheit des Katalysators.

39. Verfahren gemäß Anspruch 38, wobei das Olefin ein C₂- bis C₄-Olefin ist.

40. Verfahren gemäß Anspruch 39, wobei der aromatische Kohlenwasserstoff und das Olefin in einem Molarverhältnis von jeweils 4:1 bis 20:1 vorliegen.

41. Verfahren gemäß Anspruch 39, wobei der aromatische Kohlenwasserstoff ausgewählt ist aus der Gruppe Benzol, Toluol, Ethylbenzol, Xylol, Naphthalin, Naphthalin-Derivate, Dimethylnaphthalin oder Mischungen davon.

42. Verfahren gemäß Anspruch 19, wobei das Verfahren ein Verfahren zur Transalkylierung eines aromatischen Kohlenwasserstoffs ist, umfassend Zusammenbringen unter Transalkylierungsbedingungen eines aromatischen Kohlenwasserstoffs mit einem Polyaklyl-aromatischen Kohlenwasserstoffs unter zumindest teilweise Flüssigphasen-Bedingungen und in der Anwesenheit des Katalysators.

43. Verfahren gemäß Anspruch 42, wobei der aromatische Kohlenwasserstoff und der Polyaklyl-aromatische Kohlenwasserstoff jeweils in einem Molarverhältnis von 1:1 bis 25:1 vorliegen.

44. Verfahren gemäß Anspruch 42, wobei der aromatische Kohlenwasserstoff ausgewählt ist aus der Gruppe Benzol, Toluol, Ethylbenzol, Xylol oder Mischungen davon.

45. Verfahren gemäß Anspruch 42, wobei der Polyalkyl-aromatische Kohlenwasserstoff ein Dialkylbenzol ist.

46. Verfahren gemäß Anspruch 19, wobei das Verfahren ein Verfahren zum Umwandeln von Paraffinen in Aromaten ist, umfassend Zusammenbringen von Paraffinen unter Bedingungen, die eine Umwandlung von Paraffinen zu Aromaten hervorruft, mit einem Katalysator, umfassend das Zeolith und Gallium, Zink oder eine Gallium- oder Zinkverbindung.

47. Verfahren gemäß Anspruch 19, wobei das Verfahren ein Verfahren zur Isomerisierung von Olefinen ist, umfassend Zusammenbringen des Olefins unter Bedingungen, die Isomerisierung des Olefins hervorrufen, mit dem Katalysator.

48. Verfahren gemäß Anspruch 19, wobei das Verfahren ein Verfahren ist zur Isomeriserung einer Isomerisierungszufuhr, umfassend eine aromatische C₈-Zufuhr aus Xylol-Isomeren oder Gemischen aus Xylol-Isomeren und Ethylbenzol, wobei ein Verhältnis von Ortho-, Meta- und Paraxylolen erhalten wird, das näher an einem Gleichgewichtsverhältnis liegt, das Verfahren näher an einem Gleichgewichtsverhältnis liegt, das Verfahren umfassend Zusammenbringen der Zufuhr unter Isomerisierungsbedingungen mit dem Katalysator.

49. Verfahren gemäß Anspruch 19, wobei das Verfahren ein Verfahren zur Oligomerisierung von Olefinen ist, umfassend Zusammenbringen einer Olefinzufuhr unter Oligomerisierungsbedingungen mit dem Katalysator.

50. Verfahren gemäß Anspruch 19, wobei das Verfahren ein Verfahren zur Umwandlung von niederen Alkoholen und weiteren sauerstoffhaltigen Kohlenwasserstoffen ist, umfassend Zusammenbringen des niederen Alkohols oder weiteren sauerstoffhaltigen Kohlenwasserstoffs unter Bedingungen zur Herstellung von flüssigen Produkten mit einem Katalysator, umfassend ein Zeolith mit einem Molarverhältnis größer als 15 von einem Oxyd eines ersten vierwertigen Elements zu einem Oxyd eines zweiten vierwertigen Elements, das sich vom ersten vierwertigen Element unterscheidet, eines dreiwertigen Elements, eines fünfwertigen Elements oder einer Mischung davon und mit, nach Calcinierung, den Röntgendiffraktionslinien gemäß der folgenden Tabelle:
| 2-Theta | d-spacing (Å) | Relative Intensität (%) |
|---|---|---|
| 6,62 ± 0,2 | 13,34 | sehr stark |
| 7,44 ± 0,2 | 11,87 | stark |
| 8,42 ± 0,2 | 10,49 | mittel |
| 14,54 ± 0,2 | 6,09 | schwach |
| 14,98 ± 0,2 | 5,91 | schwach |
| 21,28 ± 0,2 | 4,17 | schwach |
| 22,58 ± 0,2 | 3,93 | sehr stark |
| 25,48 ± 0,2 | 3,49 | mittel - stark |
| 26,58 ± 0,2 | 3,35 | schwach |
| 28,34 ± 0,2 | 3,15 | schwach |

51. Verfahren gemäß Anspruch 19, wobei das Verfahren ein Herstellungsverfahren für höhergewichtige Kohlenwasserstoffe aus niedergewichtigeren Kohlenwasserstoffen ist, umfassend die Schritte:
(a) Einführen in einen Reaktionsbereich eines niedergewichtigen kohlenwasserstoffhaltigen Gases und Zusammenbringen des Gases im Bereich unter C₂₄-Kohlenwasserstoff-Synthesebedingungen mit dem Katalysator und einem Metall oder einer Metallverbindung, fähig zur Umwandlung des niedergewichtigen Kohlenwasserstoffs in einen höhergewichtigen Kohlenwasserstoff; und
(b) Entfernen aus dem Reaktionsbereich einer Zufuhr mit höhergewichtigen Kohlenwasserstoffen.

52. Verfahren gemäß Anspruch 51, wobei das Metall oder die Metallverbindung ein Lanthanoid- oder Actinoid-Metall oder eine entsprechende Metallverbindung umfasst.

53. Verfahren gemäß Anspruch 51, wobei der niedergewichtige Kohlenwasserstoff Methan ist.

54. Verfahren gemäß Anspruch 19, 21, 22, 23, 24, 25, 27, 28, 32, 34, 38 oder 42, wobei das Zeolith vorwiegend in der Wasserstoffform vorliegt.

55. Verfahren gemäß Anspruch 24, 25, 27, 28 oder 30, wobei das Katalysator zudem mindestens ein Metall aus der Gruppe VIII umfasst.

56. Verfahren zur Reduzierung von in einer Gaszufuhr enthaltenen Stickoxyden in Anwesenheit von Sauerstoff, wobei das Verfahren umfasst Zusammenbringen der Gaszufuhr mit einem Zeolith, und wobei das Zeolith ein Molarverhältnis größer als 15 aufweist von einem Oxyd eines ersten vierwertigen Elements zu einem Oxyd eines zweiten vierwertigen Elements, das sich vom ersten vierwertigen Element unterscheidet, eines dreiwertigen Elements, eines fünfwertigen Elements oder einer Mischung davon und mit, nach Calcinierung, den Röntgendiffraktionslinien gemäß der folgenden Tabelle:
| 2-Theta | d-spacing (Å) | Relative Intensität (%) |
|---|---|---|
| 6,62 ± 0,2 | 13,34 | sehr stark |
| 7,44 ± 0,2 | 11,87 | stark |
| 8,42 ± 0,2 | 10,49 | mittel |
| 14,54 ± 0,2 | 6,09 | schwach |
| 14,98 ± 0,2 | 5,91 | schwach |
| 21,28 ± 0,2 | 4,17 | schwach |
| 22,58 ± 0,2 | 3,93 | sehr stark |
| 25,48 ± 0,2 | 3,49 | mittel - stark |
| 26,58 ± 0,2 | 3,35 | schwach |
| 28,34 ± 0,2 | 3,15 | schwach |

57. Verfahren gemäß Anspruch 56, wobei das Zeolith ein Metall oder Metallionen enthält, fähig zur Katalyse der Reduzierung der Stickoxyde.

58. Verfahren gemäß Anspruch 57, wobei das Metall Kupfer, Kobalt oder Mischungen davon ist.

59. Verfahren gemäß Anspruch 57, wobei die Gaszufuhr der Abgasstrom eines Verbrennungsmotors ist.

## Revendications

1. Tamis moléculaire ayant un rapport molaire supérieur à 15 d'un oxyde d'un premier élément tétravalent à un oxyde d'un second élément tétravalent qui est différent dudit premier élément tétravalent, d'un élément trivalent, d'un élément pentavalent ou d'un de leurs mélanges et ayant, après calcination, une diffraction des rayons X indiquée sur le tableau suivant :
| 2-Thêta | distance d (Å) | Intensité relative (%) |
|---|---|---|
| 6,62 ± 0,2 | 13,34 | VS |
| 7,44 ± 0,2 | 11,87 | S |
| 8,42 ± 0,2 | 10,49 | M |
| 14,54 ± 0,2 | 6,09 | W |
| 14,98 ± 0,2 | 5,91 | W |
| 21,28 ± 0,2 | 4,17 | W |
| 22,58 ± 0,2 | 3,93 | VS |
| 25,48 ± 0,2 | 3,49 | M-S |
| 26,58 ± 0,2 | 3,35 | W |
| 28,34 ± 0,2 | 3,15 | W |

2. Tamis moléculaire ayant un rapport molaire supérieur à 15 d'un oxyde choisi dans le groupe consistant en l'oxyde de silicium, l'oxyde de germanium et leurs mélanges à un oxyde choisi entre l'oxyde d'aluminium, l'oxyde de gallium, l'oxyde de fer, l'oxyde de bore, l'oxyde de titane, l'oxyde d'indium, l'oxyde de vanadium et leurs mélanges et ayant, après calcination, les raies de diffraction des rayons X indiquées sur le tableau suivant :
| 2-Thêta | distance d (Â) | Intensité relative (%) |
|---|---|---|
| 6,62 ± 0,2 | 13,34 | VS |
| 7,44 ± 0,2 | 11,87 | S |
| 8,42 ± 0,2 | 10,49 | M |
| 14,54 ± 0,2 | 6,09 | W |
| 14,98 ± 0,2 | 5,91 | W |
| 21,28 ± 0,2 | 4,17 | W |
| 22,58 ± 0,2 | 3,93 | VS |
| 25,48 ± 0,2 | 3,49 | M-S |
| 26,58 ± 0,2 | 3,35 | W |
| 28,34 ± 0,2 | 3,15 | W |

3. Tamis moléculaire suivant la revendication 2, dans lequel les oxydes comprennent l'oxyde de silicium et l'oxyde d'aluminium.

4. Tamis moléculaire suivant la revendication 2, dans lequel les oxydes comprennent l'oxyde de silicium et l'oxyde de bore.

5. Tamis moléculaire suivant la revendication 1, ledit tamis moléculaire étant de manière prédominante sous forme hydrogène.

6. Tamis moléculaire suivant la revendication 1, ledit tamis moléculaire étant substantiellement dépourvu d'acidité.

7. Tamis moléculaire ayant une composition, tel que synthétisé à l'état anhydre, en termes des rapports molaires suivantes :
| | |
|---|---|
| YO₂/W_{c}O_{d} | 15-180 |
| M_{2/n/}YO₂ | 0,01-0,03 |
| Q/YO₂ | 0,02-0,05 |
où Y représente le silicium, le germanium ou un de leurs mélanges ; W représente l'aluminium, le gallium, le fer, le bore, le titane, l'indium, le vanadium ou leurs mélanges ; c est égal à 1 ou 2 ; d est égal à 2 lorsque c est égal à 1 ou d est égal à 3 ou 5 lorsque c est égal à 2 ; M représente un cation de métal alcalin, un cation de métal alcalino-terreux ou leurs mélanges ; n représente la valence de M ; et Q représente un cation N-cyclobutylméthyl-N-éthylhexaméthylèneiminium ou un cation N-cyclobutylméthyl-N-éthylheptaméthylèneiminium.

8. Tamis moléculaire suivant la revendication 7, dans lequel W représente l'aluminium et Y représente le silicium.

9. Tamis moléculaire suivant la revendication 7, dans lequel W représente le bore et Y représente le silicium.

10. Tamis moléculaire suivant la revendication 7, dans lequel Q représente un cation N-cyclobutylméthyl-N-éthylhexaméthylèneiminium.

11. Tamis moléculaire suivant la revendication 7, dans lequel Q représente un cation N-cyclobutylméthyl-N-éthylheptaméthylèneiminium.

12. Procédé pour la préparation d'une matière cristalline comprenant un oxyde d'un premier élément tétravalent et un oxyde d'un second élément tétravalent qui est différent dudit premier élément tétravalent, d'un élément trivalent, d'un élément pentavalent ou d'un de leurs mélanges, ledit procédé comprenant la mise en contact dans des conditions de cristallisation de sources desdits oxydes et d'un agent dirigeant la structure comprenant un cation N-cyclobutyl-méthyl-N-éthylhexaméthylèneiminium ou un cation N-cyclobutyl-méthyl-N-éthylheptaméthylèneiminium ; dans lequel la matière cristalline a, après calcination, le diagramme de diffraction des rayons X représenté sur le tableau suivant :
| 2-Thêta | distance d (Å) | Intensité relative (%) |
|---|---|---|
| 6,62 ± 0,2 | 13,34 | VS |
| 7,44 ± 0,2 | 11,87 | S |
| 8,42 ± 0,2 | 10,49 | M |
| 14,54 ± 0,2 | 6,09 | W |
| 14,98 ± 0,2 | 5,91 | W |
| 21,28 ± 0,2 | 4,17 | W |
| 22,58 ± 0,2 | 3,93 | VS |
| 25,48 ± 0,2 | 3,49 | M-S |
| 26,58 ± 0,2 | 3,35 | W |
| 28,34 ± 0,2 | 3,15 | W |

13. Procédé suivant la revendication 12, dans lequel le premier élément tétravalent est choisi dans le groupe consistant en le silicium, le germanium et leurs associations.

14. Procédé suivant la revendication 12, dans lequel le second élément tétravalent, l'élément trivalent ou l'élément pentavalent est choisi dans le groupe consistant en l'aluminium, le gallium, le fer, le bore, le titane, l'indium, le vanadium et leurs associations.

15. Procédé suivant la revendication 14, dans lequel le second élément tétravalent ou l'élément trivalent est choisi dans le groupe consistant en l'aluminium, le bore, le titane et leurs associations.

16. Procédé suivant la revendication 15, dans lequel le premier élément tétravalent est le silicium.

17. Procédé suivant la revendication 12, dans lequel l'agent dirigeant la structure est un cation N-cyclobutylméthyl-N-éthylhexaméthylèneiminium.

18. Procédé suivant la revendication 12, dans lequel l'agent dirigeant la structure est un cation N-cyclobutylméthyl-N-éthylheptaméthylèneiminium.

19. Procédé pour la conversion d'hydrocarbures, comprenant la mise en contact d'une charge hydrocarbonée d'alimentation dans des conditions de conversion d'hydrocarbures avec un catalyseur comprenant une zéolite ayant un rapport molaire supérieur à 15 d'un oxyde d'un premier élément tétravalent à un oxyde d'un second élément tétravalent qui est différent dudit premier élément tétravalent, d'un élément trivalent, d'un élément pentavalent ou d'un de leurs mélanges et ayant, après calcination, les raies de diffraction des rayons X représentées sur le tableau suivant :
| 2-Thêta | distance d (Å) | Intensité relative (%) |
|---|---|---|
| 6,62 ± 0,2 | 13,34 | VS |
| 7,44 ± 0,2 | 11,87 | S |
| 8,42 ± 0,2 | 10,49 | M |
| 14,54 ± 0,2 | 6,09 | W |
| 14,98 ± 0,2 | 5,91 | W |
| 21,28 ± 0,2 | 4,17 | W |
| 22,58 ± 0,2 | 3,93 | VS |
| 25,48 ± 0,2 | 3,49 | M-S |
| 26,58 ± 0,2 | 3,35 | W |
| 28,34 ± 0,2 | 3,15 | W |

20. Procédé suivant la revendication 19, dans lequel la zéolite est substantiellement dépourvue d'acidité.

21. Procédé suivant la revendication 19, ledit procédé étant un procédé d'hydrocraquage comprenant la mise en contact du catalyseur avec une charge hydrocarbonée d'alimentation dans des conditions d'hydrocraquage.

22. Procédé suivant la revendication 19, ledit procédé étant un procédé de déparaffinage comprenant la mise en contact du catalyseur avec une charge hydrocarbonée d'alimentation dans des conditions de déparaffinage.

23. Procédé suivant la revendication 19, le procédé étant un procédé pour améliorer l'indice de viscosité d'un produit déparaffiné de charges d'hydrocarbures cireux comprenant la mise en contact du catalyseur avec une charge d'hydrocarbures cireux dans des conditions de déparaffinage avec isomérisation.

24. Procédé suivant la revendication 19, le procédé étant un procédé pour la production d'une huile lubrifiante en C₂₀₊ à partir d'une charge oléfinique d'alimentation en C₂₀₊ comprenant, comprenant l'isomérisation de ladite charge oléfinique d'alimentation dans des conditions d'isomérisation sur le catalyseur.

25. Procédé suivant la revendication 19, le procédé étant un procédé pour le déparaffinage catalytique d'une charge d'huile hydrocarbonée d'alimentation bouillant au-delà de 350°F (177°C) et contenant des hydrocarbures à chaîne droite et à chaîne légèrement ramifiée, comprenant la mise en contact de ladite charge d'huile hydrocarbonée d'alimentation en présence d'hydrogène gazeux ajouté à une pression d'hydrogène de 15-3000 psi (103-20 684 kPa) dans des conditions de déparaffinage avec le catalyseur.

26. Procédé suivant la revendication 25, dans lequel ledit catalyseur comprend un catalyseur stratifié comprenant une première couche comprenant la zéolite et au moins un métal du Groupe VIII et une seconde couche comprenant une zéolite du type aminosilicate qui présente une plus grande sélectivité de forme que la zéolite de ladite première couche.

27. Procédé suivant la revendication 19, le procédé étant un procédé pour la préparation d'une huile lubrifiante, qui comprend :
l'hydrocraquage dans une zone d'hydrocraquage d'une charge hydrocarbonée d'alimentation pour obtenir un effluant comprenant une huile hydrocraquée ; et
le déparaffinage catalytique dudit effluent comprenant l'huile hydrocraquée à une température d'au moins 400°F (204°C) et à une pression de 15 psig à 3000 psig (103-20 684 kPa) en présence d'hydrogène gazeux ajouté avec le catalyseur.

28. Procédé suivant la revendication 19, le procédé étant un procédé pour le déparaffinage avec isomérisation d'un raffinat, comprenant la mise en contact dudit raffinat en présence d'hydrogène ajouté dans des conditions de déparaffinage avec isomérisation avec le catalyseur.

29. Procédé suivant la revendication 28, dans lequel le raffinat est une huile lubrifiante de base à haute viscosité (bright stock).

30. Procédé suivant la revendication 19, le procédé étant un procédé pour augmenter l'indice d'octane d'une charge d'hydrocarbures d'alimentation afin de former un produit ayant une teneur accrue en composés aromatiques, comprenant la mise en contact d'une charge hydrocarbonée d'alimentation qui comprend des hydrocarbures normaux et des hydrocarbures légèrement ramifiés ayant une plage d'ébullition supérieure à 40°C et inférieure à 200°C dans des conditions de conversion de composés aromatiques avec le catalyseur.

31. Procédé suivant la revendication 30, dans lequel la zéolite est substantiellement dépourvue d'acide.

32. Procédé suivant la revendication 19, le procédé étant un procédé de craquage catalytique, comprenant la mise en contact d'une charge d'hydrocarbures d'alimentation dans une zone réactionnelle dans des conditions de craquage catalytique en l'absence d'hydrogène ajouté avec le catalyseur.

33. Procédé suivant la revendication 32, dans lequel le catalyseur comprend en outre un constituant de craquage cristallin à grands pores.

34. Procédé suivant la revendication 19, le procédé étant un procédé d'isomérisation pour l'isomérisation d'hydrocarbures en C₄ à C₇, comprenant la mise en contact d'une charge d'alimentation comprenant des hydrocarbures en C₄ à C₇ normaux et légèrement ramifiés dans des conditions d'isomérisation avec le catalyseur.

35. Procédé suivant la revendication 34, dans lequel la zéolite a été imprégnée d'au moins un métal du Groupe VIII.

36. Procédé suivant la revendication 34, dans lequel le catalyseur a été calciné dans un mélange vapeur d'eau/air à une température élevée après imprégnation avec le métal du Groupe VIII.

37. Procédé suivant la revendication 35, dans lequel le métal du Groupe VIII est le platine.

38. Procédé suivant la revendication 19, le procédé étant un procédé d'alkylation d'un hydrocarbure aromatique, qui comprend la mise en contact dans des conditions d'alkylation d'au moins un excès molaire d'un hydrocarbure aromatique avec une oléfine en C₂ à C₂₀ dans des conditions de phase liquide au moins partielle et en présence du catalyseur.

39. Procédé suivant la revendication 38, dans lequel l'oléfine est une oléfine en C₂ à C₄.

40. Procédé suivant la revendication 39, dans lequel l'hydrocarbure aromatique et l'oléfine sont présents en un rapport molaire de 4:1 à 20:1, respectivement.

41. Procédé suivant la revendication 39, dans lequel l'hydrocarbure aromatique est choisi dans le groupe consistant en le benzène, le toluène, l'éthylbenzène, le xylène, le naphtalène, des dérivés de naphtalène, le diméthylnaphtalène ou leurs mélanges.

42. Procédé suivant la revendication 19, le procédé étant un procédé de transalkylation d'un hydrocarbure aromatique, qui comprend la mise en contact dans des conditions de transalkylation d'un hydrocarbure aromatique avec un hydrocarbure polyalkylaromatique dans des conditions de phase liquide au moins partielle et en présence du catalyseur.

43. Procédé suivant la revendication 42, dans lequel l'hydrocarbure aromatique et l'hydrocarbure polyalkylaromatique sont présents en un rapport molaire de 1:1 à 25:1, respectivement.

44. Procédé suivant la revendication 42, dans lequel l'hydrocarbure aromatique est choisi dans le groupe consistant en le benzène, le toluène, l'éthylbenzène, le xylène ou leurs mélanges.

45. Procédé suivant la revendication 42, dans lequel l'hydrocarbure polyalkylaromatique est un dialkylbenzène.

46. Procédé suivant la revendication 19, le procédé étant un procédé pour convertir des paraffines en composés aromatiques, qui comprend la mise en contact de paraffines dans des conditions qui provoquent la conversion des paraffines en composés aromatiques avec un catalyseur comprenant la zéolite et du gallium, du zinc ou un composé de gallium ou de zinc.

47. Procédé suivant la revendication 19, le procédé étant un procédé pour l'isomérisation d'oléfines, comprenant la mise en contact d'une telle oléfine dans des conditions qui provoquent l'isomérisation de l'oléfine avec le catalyseur.

48. Procédé suivant la revendication 19, le procédé étant un procédé pour l'isomérisation d'une charge d'isomérisation, comprenant un courant de composés aromatiques en Cg constitué d'isomères du xylène ou de mélanges d'isomères du xylène et d'éthylbenzène, dans lequel un rapport plus proche de l'équilibre d'ortho-, méta- et paraxylènes est obtenu, ledit procédé comprenant la mise en contact de ladite charge d'alimentation dans des conditions d'isomérisation avec le catalyseur.

49. Procédé suivant la revendication 19, le procédé étant un procédé pour l'oligomérisation d'oléfines, comprenant la mise en contact d'une charge d'oléfines d'alimentation dans des conditions d'oligomérisation avec le catalyseur.

50. Procédé suivant la revendication 19, le procédé étant un procédé pour la conversion d'alcools inférieurs et d'autres hydrocarbures oxygénés, comprenant la mise en contact d'un tel alcool inférieur ou autre hydrocarbure oxygéné dans des conditions pour la formation de produits liquides avec un catalyseur comprenant une zéolite ayant un rapport molaire supérieur à 15 d'un oxyde d'un premier élément tétravalent à un oxyde d'un second élément tétravalent qui est différent dudit premier élément tétravalent, d'un élément trivalent, d'un élément pentavalent ou d'un de leurs mélanges et ayant, après calcination, les raies de diffraction des rayons X représentées sur le tableau suivant :
| 2-Thêta | distance d (Å) | Intensité relative (%) |
|---|---|---|
| 6,62 ± 0,2 | 13,34 | VS |
| 7,44 ± 0,2 | 11,87 | S |
| 8,42 ± 0,2 | 10,49 | M |
| 14,54 ± 0,2 | 6,09 | W |
| 14,98 ± 0,2 | 5,91 | W |
| 21,28 ± 0,2 | 4,17 | W |
| 22,58 ± 0,2 | 3,93 | VS |
| 25,48 ± 0,2 | 3,49 | M-S |
| 26, 58 ± 0,2 | 3,35 | W |
| 28,34 ± 0,2 | 3,15 | W |

51. Procédé suivant la revendication 19, le procédé étant un procédé pour la production d'hydrocarbures de poids moléculaire plus élevé à partir d'hydrocarbures de poids moléculaire plus bas, comprenant les étapes consistant à :
(a) introduire dans une zone réactionnelle un gaz contenant des hydrocarbures de poids moléculaire plus bas et mettre en contact ledit gaz dans ladite zone dans des conditions de synthèse d'hydrocarbures en C₂₊ avec le catalyseur et un métal ou composé métallique capable de convertir l'hydrocarbure de poids moléculaire plus bas en hydrocarbure de poids moléculaire plus élevé ; et
(b) décharger de ladite zone réactionnelle un courant contenant des hydrocarbures de poids moléculaire plus élevé.

52. Procédé suivant la revendication 51, dans lequel le métal ou composé métallique comprend un métal ou composé de métal faisant partie des lanthanides ou actinides.

53. Procédé suivant la revendication 51, dans lequel l'hydrocarbure de poids moléculaire plus bas est le méthane.

54. Procédé suivant la revendication 19, 21, 22, 23, 24, 25, 27, 28, 32, 34, 38 ou 42, dans lequel la zéolite est de manière prédominante sous forme hydrogène.

55. Procédé suivant la revendication 24, 25, 27, 28 ou 30, dans lequel le catalyseur comprend en outre au moins un métal du Groupe VIII.

56. Procédé pour la réduction d'oxydes d'azote présents dans un courant gazeux en présence d'oxygène, ledit procédé comprenant la mise en contact du courant gazeux avec une zéolite, dans lequel la zéolite a un rapport molaire supérieur à 15 d'un oxyde d'un premier élément tétravalent à un oxyde d'un second élément tétravalent qui est différent dudit premier élément tétravalent, d'un élément trivalent, d'un élément pentavalent ou d'un de leurs mélanges et qui a, après calcination, les raies de diffraction des rayons X représentées sur le tableau suivant :
| 2-Thêta | distance d (Â) | Intensité relative (%) |
|---|---|---|
| 6,62 ± 0,2 | 13,34 | VS |
| 7,44 ± 0,2 | 11,87 | S |
| 8,42 ± 0,2 | 10,49 | M |
| 14,54 ± 0,2 | 6,09 | W |
| 14,98 ± 0,2 | 5, 91 | W |
| 21,28 ± 0,2 | 4,17 | W |
| 22,58 ± 0,2 | 3,93 | VS |
| 25,48 ± 0,2 | 3,49 | M-S |
| 26,58 ± 0,2 | 3,35 | W |
| 28,34 ± 0,2 | 3,15 | W |

57. Procédé suivant la revendication 56, dans lequel ladite zéolite contient un métal ou des ions métalliques capables de catalyser la réduction des oxydes d'azote.

58. Procédé suivant la revendication 57, dans lequel le métal est le cuivre, le cobalt ou leurs mélanges.

59. Procédé suivant la revendication 57, dans lequel le courant gazeux est le courant d'échappement d'un moteur à combustion interne.
